# EUROPEAN PATENT APPLICATION

(11) **EP 2 819 440 A2**
(43) Date of publication of application: **31.12.2014**
(21) Application number: 12734303.6
(22) Date of filing: 23.02.2012
(51) Int. Cl.: H04W 8/00

(54) **METHOD, DEVICE, AND SYSTEM FOR ACQUIRING QUALITY INFORMATION OF WIRELESS NETWORK**

(71) Applicant: Huawei Technologies Co., Ltd., Shenzhen, Guangdong 518129 (CN)
(72) Inventor: YU, Quan, Guangdong 518129 (CN); ZHU, Haobing, Guangdong 518129 (CN); ZHANG, Ping, Guangdong 518129 (CN); LYU, Liming, Guangdong 518129 (CN)
(74) Representative: Pfenning, Meinig & Partner GbR
(86) International application number: PCT/CN2012/071543
(87) International publication number: WO 2012/095048

(57) **Abstract**

Embodiments of the present invention provide a method, a device, and a system for acquiring wireless network quality information. The method includes: acquiring, by a terminal, wireless network quality information sent by a network element on a network side; and displaying, by the terminal, the wireless network quality information to a user. In the embodiments of the present invention, a terminal may acquire wireless network quality information and display the wireless network quality information to a user, so that user experience in a mobile broadband data service application may be perceived.

## Description

### FIELD OF THE INVENTION

The present invention relates to the field of wireless communications, and in particular, to a method, a device, and a system for acquiring wireless network quality information.

### BACKGROUND OF THE INVENTION

In an age of mobile broadband data services, user experience is one of problems that a user mostly concerns. The user experience is a capability of wireless network quality to satisfy a user service demand. The user experience is mainly determined by factors such as wireless network quality and service experience. The wireless network quality is mainly embodied in a wireless network load and an expected available network capability. The wireless network load may include, for example, information such as a cell load. The expected available network capability may include, for example, information such as a current average available speed of a user. The wireless network load refers to a use situation of a current resource of a wireless network, where the cell load refers to a use situation of a current resource usage of a cell, and may specifically include cell power, a spread spectrum code word, a transmission resource, and so on. These resources are necessary resources for providing a service for a user. An expected available network capability of a user refers to a network resource that may be allocated to the user in the case of a current cell load and based on factors such as a user class and a service type, that is, a network capability that may be obtained by the user.

Because different services have different bandwidth demands, the service experience mainly depends on the wireless network quality. If a user can know a status of a cell load in the wireless network quality, the user may predict available service experience.

According to a current mobile communication standard, in a status bar of a GUI (graphical user interface) of a mobile terminal (hereinafter referred to as a terminal), an icon of wireless network signal strength can be displayed in real time, and icons of different statuses represent different signal strength. For a mobile broadband data service, multiple wireless access technologies, such as GSM, UMTS, LTE, CDMA, WiMax and WiFi, exist. Network capabilities provided by different access technologies varies significantly, and the wireless network signal strength cannot reflect a network load and an expected available network capability. For example, a user may know that a current wireless network signal is strong according to the wireless network signal displayed on a terminal, but cannot know that a cell network load is close to saturation. Therefore, when an uplink/downlink service selected by the user needs to occupy a resource of a larger bandwidth, phenomena such as a service failure and hysteresis occur, thereby affecting the user experience. Therefore, simply displaying an icon of wireless network signal strength cannot reflect the user experience.

### SUMMARY OF THE INVENTION

Embodiments of the present invention provide a method, a device, and a system for acquiring wireless network quality information, so that user experience can be perceived.

In one aspect, a method for a terminal to acquire wireless network quality information is provided, which includes: acquiring, by a terminal, wireless network quality information sent by a network element on a network side; and displaying, by the terminal, the wireless network quality information to a user.

In another aspect, a terminal is provided, which includes an information acquiring module and a graphic user interface (GUI) displaying module, where the information acquiring module is configured to acquire wireless network quality information sent by a network element on a network side, and the GUI displaying module is configured to display the wireless network quality information to a user, where the wireless network quality information is acquired from the information acquiring module.

In another aspect, a method for transmitting wireless network quality information is provided, which includes: acquiring, by a server logical network element (HServer), wireless network quality information; and sending, by the HServer, the wireless network quality information to a terminal.

In another aspect, a device for transmitting wireless network quality information is provided. The device includes a processing module and a sending module, where the processing module is configured to acquire wireless network quality information, and the sending module is configured to send the wireless network quality information to a terminal.

In another aspect, a method for transmitting wireless network quality information is provided. The method includes: receiving, by a enabling network element (NCE), a wireless network quality information request sent by a server logical network element (HServer); and acquiring, by the NCE, wireless network quality information according to the request, and sending the wireless network quality information to the HServer.

In another aspect, a device for transmitting wireless network quality information is provided. The device includes a receiving module, an enabling module, and a sending module, where the receiving module receives a wireless network quality information request sent by a server logical network element (HServer); the enabling module acquires wireless network quality information according to the request received by the receiving module; and the sending module sends the wireless network quality information to the HServer, where the wireless network quality information is acquired by the enabling module.

In another aspect, a method for transmitting wireless network quality information is provided, which includes: generating wireless network quality information; and sending the wireless network quality information to a server logical network element (HServer).

In another aspect, a device for transmitting wireless network quality information is provided. The device includes a generating module and a sending module, where the generating module is configured to generate wireless network quality information, and the sending module is configured to send the wireless network quality information to a server logical network element (HServer).

In the foregoing technical solutions, a terminal may acquire wireless network quality information and display the wireless network quality information to a user, so that user experience in a mobile broadband data service application may be perceived.

### BRIEF DESCRIPTION OF THE DRAWINGS

To describe the technical solutions in the embodiments of the present invention more clearly, accompanying drawings needed to be used in description of the embodiments or the prior art are briefly introduced in the following. Apparently, the accompanying drawings in the following description are merely some embodiments of the present invention, and persons of ordinary skill in the art may also obtain other drawings according to these accompanying drawings without making creative efforts.
FIG 1 is a schematic architectural diagram of a system according to an embodiment of the present invention;
FIG 2 is a schematic flow chart of a method for a terminal to acquire wireless network quality information according to an embodiment of the present invention;
FIG. 3 is a schematic flow chart of a method for transmitting wireless network quality information according to an embodiment of the present invention;
FIG. 4 is a schematic flow chart of a method for transmitting wireless network quality information according to an embodiment of the present invention;
FIG 5 is a schematic flow chart of a method for transmitting wireless network quality information according to an embodiment of the present invention;
FIG 6A to FIG 6E are schematic diagrams that a terminal displays wireless network quality information and user information according to an embodiment of the present invention;
FIG 7 is a schematic interaction diagram of acquiring wireless network quality information according to an embodiment of the present invention;
FIG. 8 is a schematic interaction diagram of acquiring wireless network quality information according to another embodiment of the present invention;
FIG 9 is a schematic interaction diagram of acquiring wireless network quality information according to another embodiment of the present invention;
FIG 10 is a schematic interaction diagram of acquiring wireless network quality information according to another embodiment of the present invention;
FIG 11 is a schematic interaction diagram of acquiring wireless network quality information according to another embodiment of the present invention;
FIG 12 is a schematic interaction diagram of acquiring user information according to an embodiment of the present invention;
FIG 13 is a schematic interaction diagram of service subscription information according to an embodiment of the present invention;
FIG 14 is a schematic block diagram of a terminal according to an embodiment of the present invention;
FIG 15A and FIG 15B are schematic block diagrams of a device for transmitting wireless network quality information according to an embodiment of the present invention;
FIG. 16 is a schematic block diagram of another device for transmitting wireless network quality information according to an embodiment of the present invention; and
FIG 17 is a schematic block diagram of another device for transmitting wireless network quality information according to an embodiment of the present invention.

### DETAILED DESCRIPTION OF THE EMBODIMENTS

The technical solutions in the embodiments of the present invention are described clearly and completely in the following with reference to the accompanying drawings in the embodiments of the present invention. Apparently, the embodiments to be described are only a part rather than all of the embodiments of the present invention. Based on the embodiments of the present invention, all other embodiments obtained by persons of ordinary skill in the art without making creative efforts shall fall within the protection scope of the present invention.

The technical solutions of the present invention may be applied to various communication system, for example, a global system for mobile communication (GSM, Global System for Mobile Communication) system, a code division multiple access (CDMA, Code Division Multiple Access) system, a universal mobile telecommunication (UMTS, Universal Mobile Telecommunication System) system, long term evolution (LTE, Long Term Evolution) System, a worldwide interoperability for microwave access (WiMAX, Worldwide Interoperability for Microwave Access) system or wireless fidelity (WiFi, Wireless Fidelity).

A user equipment (UE, User Equipment) may also be referred to as a mobile terminal (Mobile Terminal), a mobile user equipment, and so on, and is called a terminal for short in this specification, which may communicate with one or more core networks through a wireless access network (for example, RAN, Radio Access Network). User equipments may be mobile terminals such as a mobile phone (or referred to as cell phone) and a computer that has a mobile terminal, for example, may be a mobile apparatus inbuilt in a portable, pocket, or handheld computer, or a vehicle-mounted mobile apparatus. They exchange languages and/or data with the wireless access network.

Network elements on a network side in a wireless system may include multiple network elements. In a network architecture for a data service, network elements on a network side may include a mobile data access network element (MDAN, Moblile Data Access Network) and a mobile data core network element (MDCN, Mobile Data Core Network), and may further include multiple network elements such as a mobile data policy system (MDPS, Mobile Data Policy System) and a mobile data charging system (MDCS, Mobile Data Charging System) for different services. In addition, terms "system" and "network" in this specification are always interchangeable for use in this specification.

The embodiments of the present invention provide a method, a device, and a system for acquiring wireless network quality information, so that user experience can be perceived. Wireless network quality is more embodied in a capability of providing a service for a user. For example, when a user needs to use a data service, if a network connection speed is high, or data in data interaction is not excessively delayed, from the perspective of user experience, it may be considered that current wireless network quality is good.

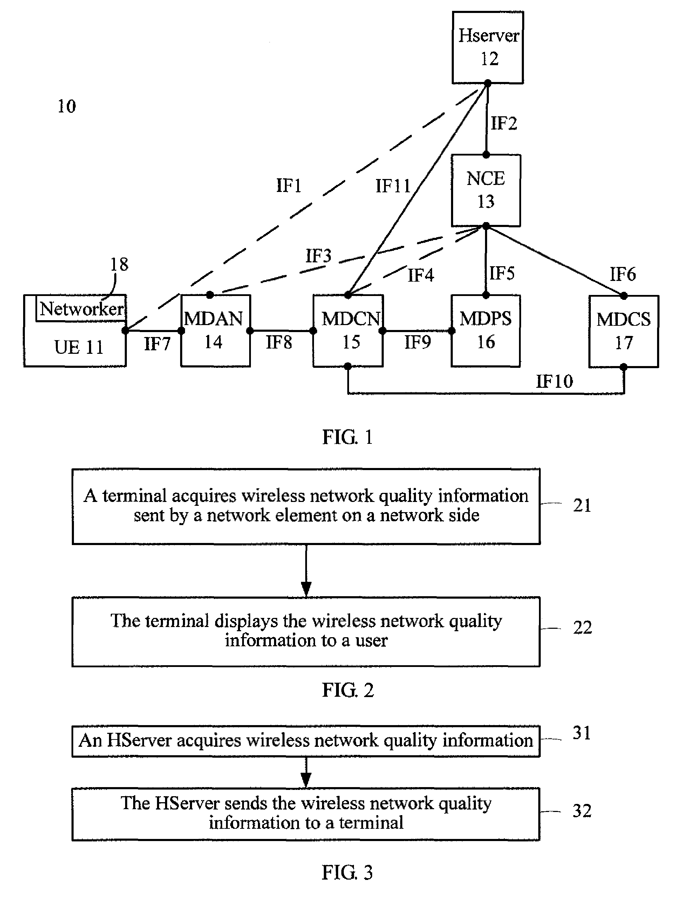

FIG 1 is a schematic architectural diagram of a system 10 according to an embodiment of the present invention.

As shown in FIG 1, the system 10 includes a UE (terminal) 11, a server logical network element (HServer) 12, an enabling logical network element (NCE, Network Capability Enabler) 13, an MDAN 14, an MDCN 15, an MDPS 16, and an MDCS 17. Network elements in the system 10 shown in FIG 1 may further include other network elements according to different applications. In order to highlight this embodiment of the present invention, other network elements are omitted here. The HServer 12 and the NCE 13 are newly added network elements on a network side.

The UE 11 may acquire wireless network quality information or user information, and after displaying the information to a user, based on further operating information of the user, subscribe to a service on demand according to the current wireless network quality information or user information. The UE 11 may receive wireless network quality or user information sent by an access network element in a wireless network, and may also implement the foregoing function by including a specific application function unit (referred to as a Networker) 18. The application function module Networker 18 may be implemented by a physical module, where software for implementing the function may be stored or run on the physical module, and in addition, may also be implemented in the form of a software function module. Installation and running modes of the Network 18 are not limited. For example, the Networker 18 may be embedded in an operating system. Alternatively, independent client software may be installed, and at this time, a function corresponding to the Networker 18 may be stored in a terminal as an icon. The Networker 18 may be activated or started by clicking the icon. The terminal acquires wireless network quality or user information by interacting with another network element through the Networker 18.

Correspondingly, a server logical network element (referred to as an HServer) 12 that communicates with the UE 11 further needs to be newly deployed in an existing network. As a convergence node of requests sent by the Networker 18 of the UE 11, the HServer 12 is configured to receive a request of the Networker 18, process the request, and deliver a processing result to the Networker 18.

When the HServer 12 cannot directly acquire wireless network quality, in the technical solution of the present invention, an enabling logical network element (referred to as an NCE) 13 for enabling a network capability may be newly added, and is configured to provide a capability of acquiring wireless network quality or user information for the HServer 12, and process a service subscription request of the HServer.

As described in the foregoing, the system 10 includes the HServer 12 and the UE 11 that carries the Networker 18, and may further include the NCE 13 if necessary. The HServer 12 and the NCE 13 are logical function units, and may be deployed on one physical entity network element or on different physical entity network elements, or may also be integrated into other existing physical network element entities separately or together. Meanwhile, other network elements on the network side such as the MDAN 14, MDCN 15, MDPS 16, and MDCS 17 may interact with the UE 11, HServer 12, and NCE 13 according to a specific requirement, so as to implement a function such as acquiring wireless network quality or user information. Main functions supported by the foregoing network elements are described in the following.

The UE 11 is a mobile communication terminal, and may be a device such as a mobile phone, a tablet computer that supports a mobile data service, or a PC. The terminal has a graphic user interface (GUI, Graphic User Interface) and can display wireless network quality or user information. The terminal may be installed with an application function module Networker 18 in various manners, acquires wireless network quality or user information from a server HServer through the Networker 18 and displays the wireless network quality or user information, and can subscribe to a business and a service on demand. In this specification, when it is mentioned that the terminal runs initially and at least an application function of the Networker 18 is activated or started. The following situations may be included: for example, the terminal is started up or rebooted. At this time, the application function module Networker 18 of the UE 11 is also started; alternatively, after the terminal is started, the application function of the Networker 18 is activated.

The HServer 12 is a server logical network element, and is an application server that is located behind an MDCN in the network. The Networker 18 on the terminal communicates with the HServer 12 through an IP layer, and a data packet between the Networker 18 and the HServer 12 is transparently transmitted by a network element on a wireless network side (a device such as an MDAN or an MDCN). An interface between the Networker and the HServer is called IF 1. As shown in FIG. 1, the interface IF 1 between the Networker 18 and the HServer 12 is represented by a dashed line, which indicates that no direct physical connection exists between the Networker 18 and the HServer 12. The Networker 18 on the terminal accesses a wireless network through the terminal, and communicates through an interface such as Gi or SGi between the MDCN 14 (a network element such as a GGSN or a P-GW) and the HServer 12. The HServer 12 receives a request sent by the Networker 18 of the terminal and processes the request. Apart from receiving wireless network quality or user information sent by the MDAN 14, optionally, the HServer 12 may also acquire wireless network quality through the NCE 13 and deliver a service subscription request. In addition, the HServer 12 receives wireless network quality or user information, and a processing result of service subscription from the NCE 13, and forwards the wireless network quality or user information, and the processing result of service subscription to the Networker 18 of the terminal. An interface between the HServer 12 and the NCE 13 is called IF 2. The HServer 12 may be a server-side device of application software, which receives all client requests, forwards the client requests to a corresponding device or module for processing. The HServer 12 may be regarded as an intermediate node for information intercommunication between the terminal and another network element. The HServer 12 may passively receive network information sent by another network element on the network side, and may also forward the network information, but cannot make an information request directly to the network side.

The NCE 13 is an enabling logical network element. As a network capability enabler, the NCE 13 receives a request for acquiring wireless network quality or user information, where the request for acquiring wireless network quality or user information is reported from the HServer 12, acquires the wireless network quality or user information by interacting with each network element in the wireless network, and forwards the wireless network quality or user information to the HServer 12. The wireless network quality or user information is forwarded to the Networker 18 of the terminal through the HServer 12, and is displayed on the UE 11. In addition, the NCE 13 also receives a service subscription request reported from the HServer 12, and interacts with each network element to complete processes such as service subscription, charging, and policy control. The NCE 13 may be a gateway that provides a network capability externally. Requesting for network information or delivery of an instruction to the network needs to be implemented through the NCE 13, that is, an external device cannot directly communicate with a core network device of the network.

The MDAN 14 is a mobile data access network. The MDAN may be a BTS and BSC in a GSM network, may be a NodeB and RNC in a UMTS network, may be an eNodeB in an LTE network, may be a BTS and an eAN/ePCF in a CDMA network, may be a BS in a WiMax network, and may be an AN in a WiFi network. An interface between the MDAN and the UE is called IF 7. Corresponding to the GSM, UTSM, LTE, CDMA, WiMax, or WiFi network, the IF 7 may be a Um, Uu, Uu-LTE, Um, R1, or Ww interface. In this solution, a function of the MDAN maybe enhanced according to a requirement, for example, calculation of wireless network quality needs to be supported, detection of a cell load status is supported, and calculation of a current average available rate of a user is supported. The MDAN can also report wireless network quality information by interacting with the NCE. The MDAN may also receive, from the NCE, a policy after service subscription of the user, and perform the policy. An interface between the MDAN 14 and the NCE 13 is called IF 3.

The MDCN 15 is a mobile data core network, and may be a serving GRPS support node (SGSN, Serving GPRS Support Node) and gateway GPRS support node (GGSN, Gateway GPRS Support Node) in a GSM or UMTS network, may be a mobility management entity (MME, Mobility Management Entity), serving gateway (S-GW, Serving GateWay) and PDN gateway (P-GW, PDN-GateWay) in an LTE network, may be an HRPD serving gateway (HSGW, HRPD Serving GateWay) or packet data serving node (PDSN, Packet Data Serving Node) in a CDMA network, and may be an access service network gateway (ASN-GW, Access Service Network GateWay) in a WiMax network. In this solution, the MDCN 15 may implement the following functions according to a requirement, for example, supporting reception of wireless network quality or user information from the MDAN and transfer of the wireless network quality or user information to the NCE. The MDCN may also receive, from the NCE, a policy after service subscription of the user, and perform the policy. An interface between the MDCN and the NCE is called IF 4. An interface between the MDCN and the MDAN is called IF 8. Corresponding to the GSM, UTSM, LTE, CDMA, WiMax, or WiFi network, the IF 8 interface may be a Gb, Iu, Sl, A10 (or A11), R6, or SWn interface. An interface between the MDCN 15 and the HServer 11 is called IF 11, which may be an interface such as Gi or SGi.

The MDPS 16 is a mobile data policy control system and may be a PCRF (policy and charging rules function entity), and may also be another network element that has a policy control function. In this solution, the MDPS may implement the following functions according to a requirement, for example, receiving a request for user subscription information and a package use situation from the NCE, processing the request and feeding back a result. The MDPS may also receive a service subscription instruction from the NCE and perform service control. The user subscription information may include information such as a user class, and the package use situation may include information such as a remaining package quota. An interface between the MDPS 16 and the NCE 13 is called IF 5. An interface between the MDPS and the MDCN is called IF 9, which may be an interface such as Gx.

The MDCS 17 is a mobile data charging system and may be a network element that can charge for a mobile data service, such as a CG (charging gateway, Charging Gateway) or OCS (on-line charging system, On-line Charging System). In this solution, the MDCS 17 may implement the following functions according to a requirement, for example, receiving a service subscription instruction from the NCE, and completing charging control. An interface between the MDCS and the NCE is called IF 6. An interface between the MDCS and the MDCN is called IF 10, which may be an interface such as Ga or Gy.

Next, the technical solutions of the present invention are described according to the network architecture shown in the system 10 of FIG 1.

FIG 2 is a schematic flow chart of a method 20 for a terminal to acquire wireless network quality information according to an embodiment of the present invention. A terminal for performing the method may be the UE 11 shown in FIG. 1, and the method 20 includes the following content.

21: A terminal acquires wireless network quality information sent by a network element on a network side.

22: The terminal displays the wireless network quality information to a user.

In this embodiment of the present invention, a terminal may acquire wireless network quality information and display the wireless network quality information to a user, so that user experience in a mobile broadband data service application may be perceived.

In addition, optionally, the wireless network quality information includes at least one of the following: a wireless network load and an expected available network capability.

The wireless network load and the expected available network capability are a wireless network load and an expected available network capability that are associated with a data service.

The terminal displays the wireless network quality information to the user, which includes: adding an icon on a system status bar of the terminal, where the icon is used to display the wireless network quality information.

When the network element on the network side includes a mobile data access network element (MDAN), the terminal acquires the wireless network quality information sent by the network element on the network side, which specifically includes: acquiring, by the terminal, the wireless network quality information sent by the MDAN.

When the network element on the network side includes a server logical network element (HServer), the terminal acquires the wireless network quality information sent by the network element on the network side, which specifically includes: acquiring, by the terminal, the wireless network quality information sent by the HServer.

The acquiring, by the terminal, the wireless network quality information sent by the server logical network element (HServer) specifically includes: when the network element on the network side further includes an enabling logical network element (NCE) and an MDAN, requesting, by the HServer, the wireless network quality information from the NCE, sending, by the NCE, the wireless network quality information to the HServer after acquiring the wireless network quality information from the MDAN, and sending, by the HServer, the wireless network quality information to the terminal, where the wireless network quality information is acquired from the NCE; or reporting, by the MDAN, the wireless network quality information to the HServer, and sending, by the HServer, the wireless network quality information to the terminal, where the wireless network quality information is reported by the MDAN.

The acquiring, by the terminal, the wireless network quality information sent by the server logical network element (HServer) specifically includes: when the network element on the network side further includes a mobile data core network element (MDCN), requesting, by the HServer, the wireless network quality information from the NCE, sending, by the MDCN, detected wireless network quality information to the NCE or sending, by the MDCN, the wireless network quality information to the NCE, where the wireless network quality information is acquired from the MDAN, sending, by the NCE, the wireless network quality information to the HServer, and sending, by the HServer, the wireless network quality information to the terminal, where the wireless network quality information is acquired from the NCE.

Before the sending, by the MDCN, the detected wireless network quality information to the NCE or sending, by the MDCN, the wireless network quality information to the NCE, where the wireless network quality information is acquired from the MDAN, the method further includes: requesting, by the NCE, the wireless network quality information from the MDCN.

Before the acquiring, by the terminal, the wireless network quality information sent by the server logical network element HServer, the method further includes: sending, by the terminal, a request for acquiring the wireless network quality information to the HServer.

The sending, by the terminal, the request for acquiring the wireless network quality information to the HServer specifically includes: by being triggered by an event, sending, by the terminal, the request for acquiring the wireless network quality information to the HServer.

The event includes: timeout of a timer of the terminal or initial running of the terminal.

The method further includes: after the terminal acquires the wireless network quality information, if it is determined that the wireless network quality information is different from currently displayed wireless network quality information, the terminal displays the wireless network quality information to the user, which is specifically includes: performing, by the terminal, information refreshing on the wireless network quality information that is displayed to the user.

The method further includes: further acquiring, by the terminal, user information sent by the network element on the network side, and displaying, by the terminal, the user information to the user.

The user information includes at least one of the following: user subscription information and a package use situation.

The method further includes: acquiring, by the terminal, operating information of service subscription of the user, sending a service subscription request to the network element on the network side according to the operating information, and receiving and displaying feedback information of the service subscription request, where the feedback information of the service subscription request is sent by the network element on the network side.

In the foregoing technical solution, a terminal may further acquire user information, and display the user information to a user, so that the user may apply for a service for improving service experience on demand on the premise that the user perceives user experience in advance, thereby improving convenience for the user in a mobile broadband data service application.

FIG 3 is a schematic flow chart of a method 30 for transmitting wireless network quality information according to an embodiment of the present invention. A device for performing the method may be the HServer 12 shown in FIG 1, and the method 30 includes the following content

31: A server logical network element (HServer) acquires wireless network quality information.

32: The HServer sends the wireless network quality information to a terminal.

In this embodiment of the present invention, an HServer may acquire wireless network quality information and send the wireless network quality information to a terminal, and the terminal displays the wireless network quality information to a user, so that user experience in a mobile broadband data service application may be perceived.

In addition, optionally, the wireless network quality information includes at least one of the following: a wireless network load and an expected available network capability.

The wireless network load and the expected available network capability are a wireless network load and an expected available network capability that are associated with a data service.

A specific process that the HServer acquires the wireless network quality information includes: requesting, by the HServer, wireless network quality information from an enabling logical network (NCE), sending, by the NCE, the wireless network quality information to the HServer after acquiring the wireless network quality information from a mobile data access network element (MDAN); or reporting, by the MDAN, the wireless network quality information to the HServer.

The reporting, by the MDAN, the wireless network quality information to the HServer includes: reporting, by the MDAN, the wireless network quality information to the HServer through an HTTP header of an HTTP application data packet, where the HTTP header carries the wireless network quality information.

A specific process that the HServer acquires the wireless network quality information includes: requesting, by the HServer, the wireless network quality information from the NCE, sending, by a mobile data core network element (MDCN), detected wireless network quality information to the NCE or sending, by the MDCN, the wireless network quality information to the NCE, where the wireless network quality information is acquired from the MDAN, and sending, by the NCE, the wireless network quality information to the HServer.

The sending, by the MDCN, the wireless network quality information to the NCE, where the wireless network quality information is acquired from the MDAN, includes: transferring, by the MDAN, the wireless network quality information to the MDCN through a general packet radio service tunneling protocol-user plane GTP-U header, and sending, by the MDCN, the wireless network quality information to the NCE, where the wireless network quality information is acquired from the MDAN, and the GTP-U header carries the wireless network quality information.

Before the sending, by the MDCN, the detected wireless network quality information to the NCE or the sending, by the MDCN, the wireless network quality information to the NCE, where the wireless network quality information is acquired from the MDAN, the method further includes: requesting, by the NCE, the wireless network quality information from the MDCN.

The method further includes: acquiring, by the HServer, user information from the NCE and sending the user information to the terminal.

The user information includes at least one of the following: user subscription information and a package use situation.

A method for the HServer to acquire the user information from the NCE specifically includes: requesting, by the NCE, the user information from a mobile data policy system (MDPS) according to a request for acquiring the user information, where the request for acquiring the user information is sent by the HServer, and sending the user information to the HServer, where the user information is acquired from the MDPS.

The method further includes: receiving, by the HServer, a service subscription request from the terminal, forwarding the service subscription request to the NCE, and sending feedback information of the service subscription request to the terminal, where the feedback information of the service subscription request is from the NCE.

Before the HServer acquires the wireless network quality information, the method further includes: before sending the wireless network quality information to the terminal, receiving, by the HServer, a request for acquiring the wireless network quality information, where the request for acquiring the wireless network quality information is sent by the terminal.

The HServer acquires the wireless network quality information, which specifically includes: by being triggered by an event, acquiring, by the HServer, the wireless network quality information.

The event includes: timeout of a timer of the HServer or knowing, by the HServer, that the terminal runs initially.

In this embodiment of the present invention, an HServer may further acquire user information and send the user information to a terminal, and the terminal displays the user information to a user, so that convenience for the user in a mobile broadband data service application may be perceived.

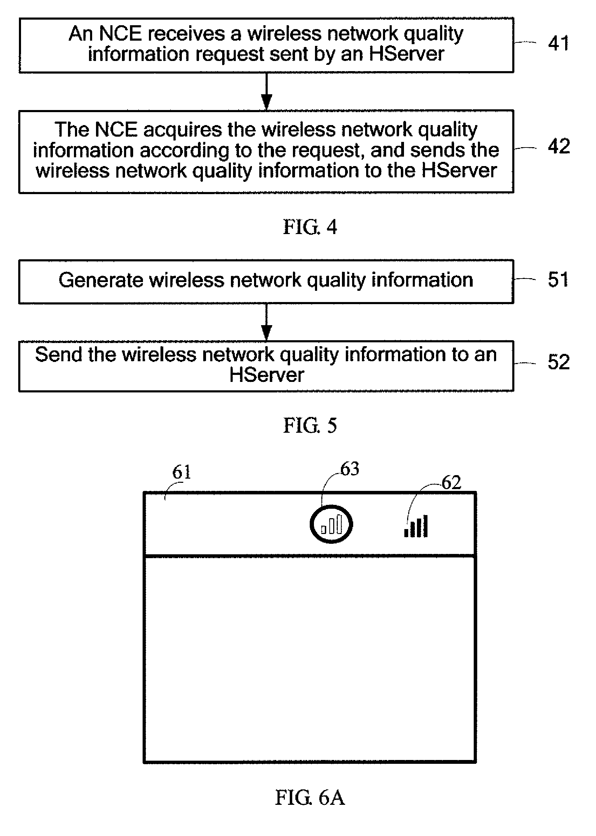

FIG 4 is a schematic flow chart of a method 40 for transmitting wireless network quality information according to an embodiment of the present invention. A device for performing the method may be the NCE 13 shown in FIG 1, and the method 40 includes the following content.

41: When network elements on a network side include an enabling logical network element (NCE) and a server logical network element (HServer), the NCE receives a wireless network quality information request sent by the HServer.

42: The NCE acquires the wireless network quality information according to the request, and sends the wireless network quality information to the HServer.

In this embodiment of the present invention, an NCE may acquire wireless network quality information and send the wireless network quality information to a terminal, and the terminal displays the wireless network quality information to a user, so that user experience in a mobile broadband data service application may be perceived.

In addition, optionally, the wireless network quality information includes at least one of the following: a wireless network load and an expected available network capability that are associated with a data service.

The wireless network load and the expected available network capability are a wireless network load and an expected available network capability that are associated with a data service.

The NCE acquires the wireless network quality information and sends the wireless network quality information to the HServer, which specifically include: after acquiring the wireless network quality information from a mobile data access network element (MDAN), sending, by the NCE, the wireless network quality information to the HServer.

The NCE acquires the wireless network quality information and sends the wireless network quality information to the HServer, which specifically include: sending, by a mobile data core network element (MDCN), detected wireless network quality information to the NCE, and sending, by the NCE, the wireless network quality information to the HServer, where the wireless network quality information is acquired from the MDCN; or sending, by a mobile data core network element (MDCN), the wireless network quality information to the NCE, where the wireless network quality information is acquired from a mobile data access network element (MDAN), and sending, by the NCE, the wireless network quality information to the HServer, where the wireless network quality information is acquired from the MDCN.

Before the NCE acquires the wireless network quality information, the method further includes: sending, by the NCE, a request for the wireless network quality information to the MDCN.

The method further includes: receiving a request for acquiring user information, where the request for acquiring user information is sent by the HServer, sending a request for user information to a mobile data policy system (MDPS) according to the request for user information, and sending the user information to the HServer, where the user information is acquired from the MDPS.

The user information includes at least one of the following: user subscription information and a package use situation.

The method further includes: receiving a service subscription request sent by the HServer, and after interacting with the mobile data policy system (MDPS) and a mobile data charging system (MDCS), sending acquired feedback information of the service subscription request to the HServer.

In this embodiment of the present invention, an NCE may further acquire user information and send the user information to a terminal, and the terminal displays the user information to a user, so that convenience for the user in a mobile broadband data service application may be perceived.

FIG 5 is a schematic flow chart of a method 50 for transmitting wireless network quality information according to an embodiment of the present invention. The method 50 includes the following content.

51: Generate wireless network quality information.

52: Send the wireless network quality information to a server logical network element (HServer).

In this embodiment of the present invention, a device may generate wireless network quality information and send the wireless network quality information to a terminal, and the terminal displays the wireless network quality information to a user, so that user experience in a mobile broadband data service application may be perceived.

A device for performing the method may be the MDAN 14 shown in FIG 1. In this case, optionally, the wireless network quality information includes at least one of the following: a wireless network load and an expected available network capability that are associated with a data service.

The wireless network load and the expected available network capability are a wireless network load and an expected available network capability that are associated with a data service.

The generating the wireless network quality information includes: generating the wireless network quality information according to an integrated bandwidth allocation weight of a single user, a total integrated bandwidth allocation weight in a system, or a system available bandwidth.

The expected available network capability includes an average available rate of the user. The generating the wireless network quality information specifically includes: generating an average available rate of a user through the following formula, where
average available rate of a user = (integrated bandwidth allocation weight of a single user/total integrated bandwidth allocation weight in a system)*system available bandwidth.

The integrated bandwidth allocation weight of a single user includes: integrated bandwidth allocation weight of a single user = signal quality weight of the user*bandwidth configuration weight of the user, where the signal quality weight of the user refers to a scheduling weight that is configured according to different signal strength of the terminal by a mobile data access network element (MDAN), and the bandwidth configuration weight of the user refers to a bandwidth weight that is configured according to attributes such as a user class, a service type, and a service class of the user in the MDAN.

The total integrated bandwidth allocation weight in the system indicates a sum of integrated bandwidth allocation weights of all users that need to send data in the system.

The system available bandwidth includes:
system available bandwidth = total bandwidth that the system can provide - bandwidths of all voice users in the system - minimum assured bandwidths of data services required by all users in the system.

The sending the wireless network quality information to the HServer specifically includes: reporting, by a mobile data access network element MDAN, the wireless network quality information to the HServer through an HTTP header of a generated HTTP application data packet, where the HTTP header carries the wireless network quality information; or transferring, by a mobile data access network element (MDAN), the wireless network quality information to a mobile data core network element (MDCN) through a generated general packet radio service tunneling protocol-user plane (GTP-U) header, sending, by the MDCN, the wireless network quality information to an enabling logical network element NCE, where the wireless network quality information is acquired from the MDAN, and sending, by the NCE, the wireless network quality information to the HServer, where the wireless network quality information is acquired from the MDCN, and the GTP-U header carries the wireless network quality information.

Alternatively, a device for performing the method may be the MDCN 15 shown in FIG. 1. In this case, optionally, the wireless network quality information includes at least one of the following: a wireless network load and an expected available network capability that are associated with a data service.

The wireless network load and the expected available network capability are a wireless network load and an expected available network capability that are associated with a data service.

The generating the wireless network quality information includes: generating the wireless network quality information according to a round trip time (RTT) and a packet loss rate.

The sending the wireless network quality information to the HServer specifically includes: sending generated wireless network quality information to an enabling logical network element (NCE), and sending, by the NCE, acquired wireless network quality information to the HServer.

In this embodiment of the present invention, a terminal may acquire wireless network quality information that is generated and sent by a device, and display the wireless network quality information to a user, so that user experience in a mobile broadband data service application may be perceived.

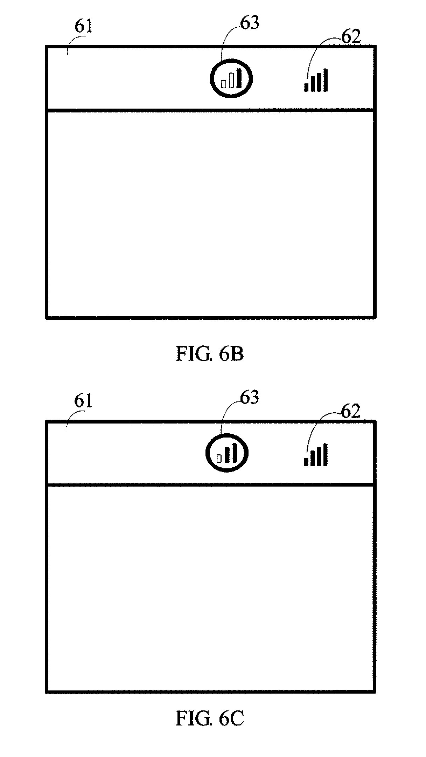

In an embodiment of the present invention, a terminal starts a Networker, sends wireless network quality information or user information to a GUI displaying module after acquiring the wireless network quality information or user information through the Networker, and displays the foregoing information on the GUI displaying module through a corresponding display function of the Networker. A variety of display manners are available, which include, but are not limited to, manners in this embodiment of the present invention. FIG. 6A to FIG 6E are schematic diagrams that a terminal displays wireless network quality information and user information according to an embodiment 60 of the present invention.

For brevity, information such as a cell load, a current average available rate of a user, a user class, and a remaining package quota is taken as an example for description in this embodiment of the present invention, where wireless network quality information includes, but is not limited to, information such as a cell load and a current average available rate of a user; and user information includes, but is not limited to, a user class, a remaining package quota, and so on.

Wireless network quality information or user information is displayed in a status bar 61 of a terminal and is parallel to an icon 62 for displaying wireless network signal strength in a current status bar of the terminal. A cell load is taken as an example. A Networker icon 63 is added on the left side or right side of the icon of the wireless signal strength. The icon 63 displays a real-time cell load, and different icons represent different cell load statuses. A cell load status may include, but is not limited to normal, congestion, and overload statuses shown in FIG. 6A to FIG 6C respectively. A GUI displaying module of the terminal displays a corresponding icon in the status bar according to a cell load status that is reported by an information acquiring module, and a user may clearly perceive a cell load status according to different icons. Other information may also be defined as a corresponding icon and displayed in the status bar.

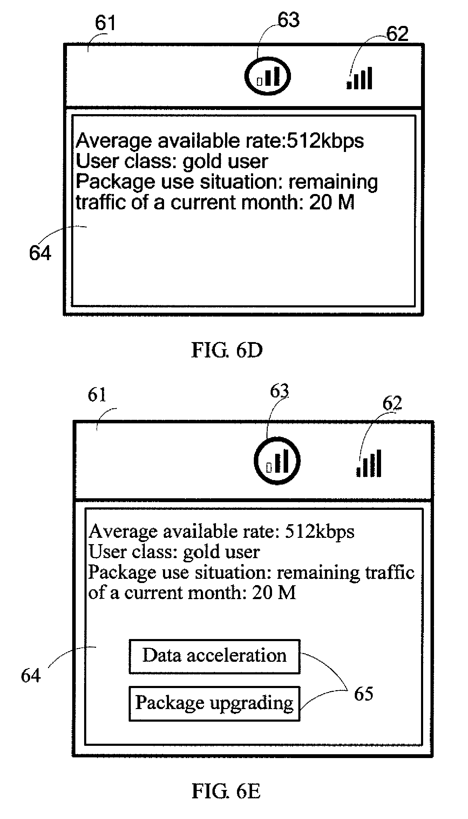

Optionally, partial information such as the cell load is displayed in the status bar of the terminal. Other information is displayed in a graphic interface 64 that corresponds to a function of the Networker. A method for displaying cell load information in the status bar of the terminal is as described in the foregoing, and is not described herein again. The graphic interface 64 corresponding to the function of the Networker may be shown in the front of a terminal interface by clicking the icon 63 of the Networker in the status bar. Related information, such as a current available rate of a user, a user class, and a package use situation, may be displayed in the graphic interface 64 that corresponds to the function of the Networker. Reference is made to FIG 6D.

The Networker may include at least the following function modules: an information acquiring module and a GUI displaying module. The information acquiring module is configured to acquire wireless quality information or user information by communicating with an HServer, where the wireless quality information or user information needs to be displayed on a terminal GUI; and store the wireless quality information or user information and notify the wireless quality information or user information to the GUI displaying module. The GUI displaying module displays a corresponding icon or text information on the GUI according to the information notified by the information acquiring module.

In the foregoing embodiment, display of wireless network quality information or user information may be updated in the following manners.

Optionally, after acquiring wireless network quality information or user information, the information acquiring module judges whether the wireless network quality information or user information is the same as content currently displayed by the GUI displaying module; and if different, the information acquiring module notifies the GUI displaying module of performing information refreshing, or directly invokes a function provided by the GUI displaying module, to perform refreshing directly.

Optionally, by being triggered by a timer, the GUI displaying module may directly acquire information from the information acquiring module for refreshing.

On the condition that a user knows currently available user experience, that is, information such as a cell load, average available rate, user class, and package use situation, the user may subscribe to a corresponding service according to a service demand, for example, data acceleration or package upgrading. Therefore, the graphic interface 64 corresponding to the function of the Networker may further display a service subscription function, for example, display virtual buttons 65 and 66 for subscribing to data acceleration and package upgrading, as shown in FIG 6E. By receiving operating information of the user, for example, clicking a "data acceleration" virtual button 65, a subscription interface may be opened to start a service subscription process. When feedback information of the service subscription is received, the graphic interface 64 may further display that the service subscription is successful or failed.

In this embodiment of the present invention, a terminal may acquire wireless network quality information and display the wireless network quality information to a user, so that user experience in a mobile broadband data service application may be perceived.

In addition, in the foregoing technical solution, a terminal may further acquire user information and display the user information to a user, so that the user may apply for a service for improving service experience on demand on the premise that the user perceives user experience in advance, thereby improving convenience for the user in a mobile broadband data service application.

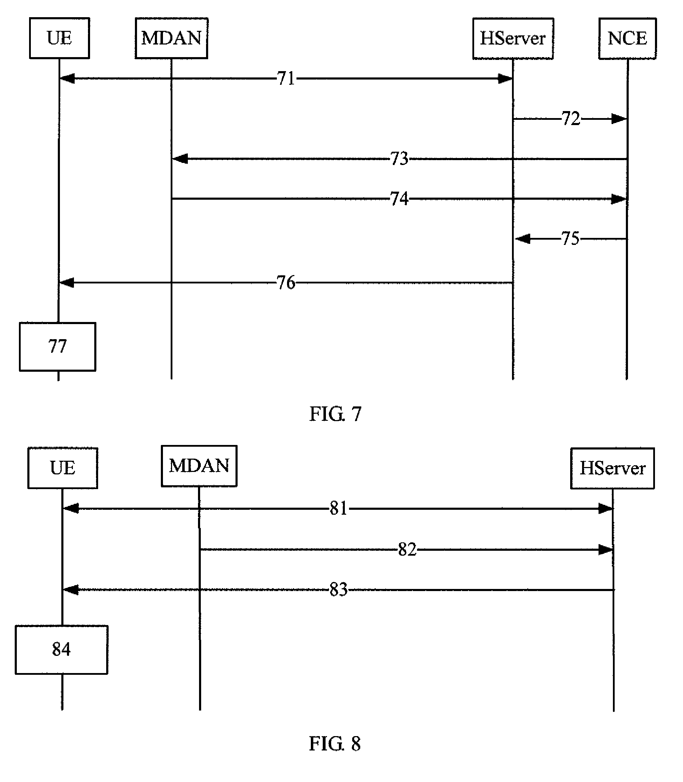

FIG 7 is a schematic interaction diagram of acquiring wireless network quality information according to another embodiment 70 of the present invention. A wireless network system in the embodiment 70 includes at least a UE, an HServer, an NCE, and an MDAN. The embodiment 70 includes the following content.

71: Activate a Networker on a terminal. After the terminal initiates packet data protocol

(PDP, Packet Data Protocol) activation or bearing activation, a connection is established between the Networker of the terminal and an HServer, and the Networker maintains in an active status through a message such as a heartbeat.

Then, an information acquiring module in the Networker of the terminal performs wireless network quality information interaction with a specific network element.

72: The HServer requests wireless network quality information, for example, a cell load or an average available rate, from an NCE at regular time.

73: The NCE forwards a request for wireless network quality information to an MDAN.

74: The MDAN generates wireless network quality information, for example, detecting a cell load status and calculating a current average available rate of a user, and returns the wireless network quality information to the NCE.

A cell load status may be classified into normal, congestion, and overload statuses.

An average available rate of a user may be calculated by using the following method:
average available rate of a user = (integrated bandwidth allocation weight of a single user/total integrated bandwidth allocation weight in a system)*system available bandwidth, where
integrated bandwidth allocation weight of a single user = signal quality weight of the user*bandwidth configuration weight of the user, where the signal quality weight of the user is associated with a distance from the user to a base station; the bandwidth configuration weight of the user is determined through quality of service parameters such as a priority level, service type, and service class of the user; the total integrated bandwidth allocation weight in the system is a sum of integrated bandwidth allocation weights of all users that need to send data in the system; and the signal quality weight of the user refers to a scheduling weight that is configured according to different signal strength of the terminal in the MDAN. The bandwidth configuration weight of the user refers to a bandwidth weight that is configured according to attributes such as a user class, a service type, and a service class of the user in the MDAN; and
system available bandwidth = total bandwidth that the system can provide - bandwidths of all voice users in the system - minimum assured bandwidths of data services required by all users in the system.

75: The NCE returns the wireless network quality information to the HServer.

76: The HServer pushes the wireless network quality information to the Networker of the terminal.

The HServer pushes data to the Networker of the terminal according to an IP connection between the HServer and the Networker of the terminal, and the data may be borne by using an application layer message such as HTTP.

77: Display the wireless network quality information on a GUI interface of the terminal.

A manner for acquiring information may be actively acquiring information or passively receiving information. The actively acquiring information indicates that an information acquiring module of the Networker actively requests, by being triggered by an event, information from the HServer. Here, event triggering may occur when the Network runs initially, or event triggering occurs when a timer that is disposed at the Networker times out. The passively acquiring information indicates that the HServer actively sends information to the information acquiring module of the Networker, where the information may be sent when the HServer detects that the Networker is started. A timer may run at the HServer, and triggering occurs when the timer times out. The triggering may also occur due to another event, for example, the HServer knows that the Networker is activated. The triggering occurs when the HServer receives the wireless network quality information that is actively reported by the MDAN and detects that the wireless network quality information is different from wireless network quality information that is currently displayed by the Networker. In order to avoid redundancy, a manner for acquiring information may be specified, or priority levels of multiple manners for acquiring information may also be sequenced. The manner for acquiring information is also applicable to the following embodiments.

In this embodiment of the present invention, a terminal may acquire wireless network quality information and display the wireless network quality information to a user, so that user experience in a mobile broadband data service application may be perceived.

FIG. 8 is a schematic interaction diagram of acquiring wireless network quality information according to another embodiment 80 of the present invention.

A wireless network system in the embodiment 80 includes at least a UE, an HServer, and an MDAN. The embodiment 80 includes the following content.

81: Activate a Networker on a terminal. After the terminal initiates packet data protocol (PDP, Packet Data Protocol) activation or bearing activation, a connection is established between the Networker of the terminal and an HServer, and the Networker maintains in an active status through a message such as a heartbeat.

Then, an information acquiring module in the Networker of the terminal performs wireless network quality information interaction with a specific network element.

82: A data packet sent by the Networker of the terminal to the HServer may be borne by an HTTP protocol; and an MDAN detects, through an HServer IP address of a data packet destination address, the data packet sent by the Networker to the HServer, and carries wireless network quality information, for example, a cell load or current average available rate, to the HServer by extending a header of the HTTP data packet. For a calculation solution of the wireless network quality information, reference is made to step 74 in the embodiment 70.

83: The HServer pushes the wireless network quality information (for example, the cell load or average available rate) to the Networker of the terminal.

84: Display the wireless network quality information on an interface of the terminal.

In this embodiment of the present invention, a terminal may acquire wireless network quality information and display the wireless network quality information to a user, so that user experience in a mobile broadband data service application may be perceived.

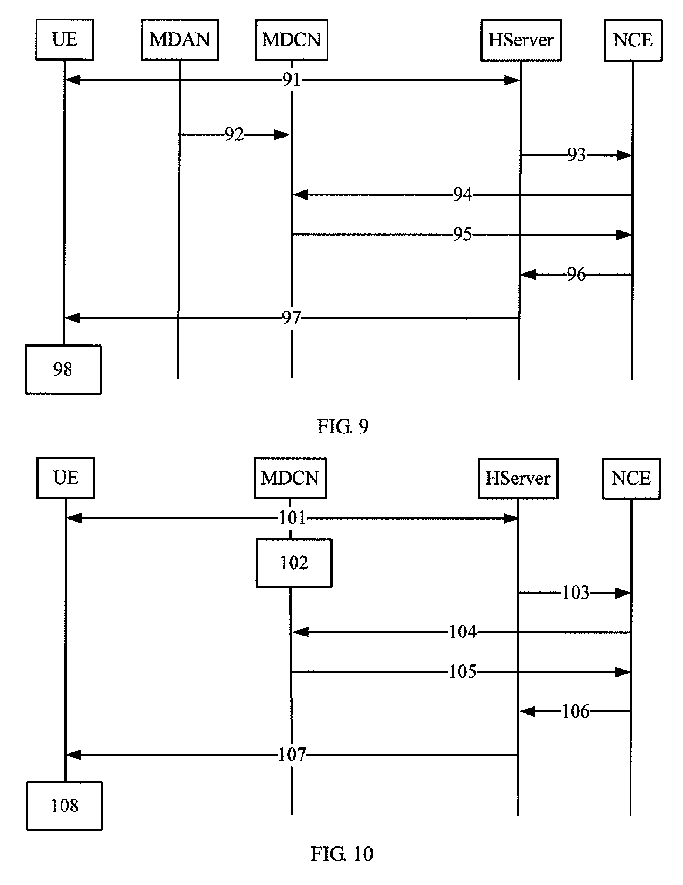

FIG 9 is a schematic interaction diagram of acquiring wireless network quality information according to another embodiment 90 of the present invention.

A wireless network system in the embodiment 90 includes at least a UE, an HServer, an NCE, an MDAN, and an MDCN. The embodiment 90 includes the following content.

91: Activate a Networker on a terminal. After the terminal initiates packet data protocol (PDP, Packet Data Protocol) activation or bearing activation, a connection is established between the Networker of the terminal and an HServer, and the Networker maintains in an active status through a message such as a heartbeat.

Then, an information acquiring module in the Networker of the terminal performs wireless network quality information interaction with a specific network element.

92: An MDAN may calculate wireless network quality information, for example, detecting a cell load status and calculating a current average available rate of a user. For a solution for calculating wireless network quality such as the cell load or average available rate, reference is made to step 74 in the embodiment 70. The MDAN carries the wireless network quality, for example, the cell load or average available speed, to an MDCN by extending a general packet radio service tunneling protocol-user plane (GTP-U, GPRS Tunneling Protocol - User plane) header of a data packet of a user. The MDCN may include, for example, a GGSN or P-GW corresponding to different wireless systems. The MDCN terminates a GTP-U packet, parses the packet to acquire the wireless network quality, and stores the wireless network quality in a user context.

93: The HServer requests the wireless network quality, for example, the cell load or average available rate, from an NCE at regular time.

94: The NCE forwards a request for wireless network quality information (for example, the cell load or average available rate) to the MDCN. This step is optional, that is, the MDCN may directly report the wireless network quality (for example, the cell load or average available rate) to the NCE, where the wireless network quality is acquired from the MDAN, while the NCE does not need to send a request to the MDCN.

95: The MDCN returns the wireless network quality information (for example, the cell load or average available rate) to the NCE, where the wireless network quality information is acquired from the MDAN.

96: The NCE returns the wireless network quality information (for example, the cell load or average available rate) to the HServer.

97: The HServer pushes the wireless network quality information (for example, the cell load or average available rate) to the Networker of the terminal.

98: Display the wireless network quality information on an interface of the terminal.

In this embodiment of the present invention, a terminal may acquire wireless network quality information and display the wireless network quality information to a user, so that user experience in a mobile broadband data service application may be perceived.

FIG 10 is a schematic interaction diagram of acquiring wireless network quality information according to another embodiment 100 of the present invention.

A wireless network system in the embodiment 100 includes at least a UE, an HServer, an NCE, and an MDCN. The embodiment 100 includes the following content.

101: Activate a Networker on a terminal. After the terminal initiates packet data protocol (PDP, Packet Data Protocol) activation or bearing activation, a connection is established between the Networker of the terminal and an HServer, and the Networker maintains in an active status through a message such as a heartbeat.

Then, an information acquiring module in the Networker of the terminal performs wireless network quality information interaction with a specific network element.

102: An MDCN may know wireless network quality by detecting quality of service such as an RTT (Round Trip Time, round trip time) and a packet loss rate, and stores the wireless network quality in a user context.

103: The HServer requests the wireless network quality (for example, a cell load or an average available rate) from an NCE at regular time.

104: The NCE forwards a request for wireless network quality information (for example, the cell load or average available rate) to the MDCN.

This step is optional, that is, the MDCN may directly report the wireless network quality (for example, the cell load or average available rate) detected from an MDAN to the NCE, while the NCE does not need to send a request to the MDCN.

105: The MDCN returns the wireless network quality information (for example, the cell load or average available rate) to the NCE, where the wireless network quality information is acquired from the MDAN.

106: The NCE returns the wireless network quality information (for example, the cell load or average available rate) to the HServer.

107: The HServer pushes the wireless network quality information (for example, the cell load or average available rate) to the Networker of the terminal.

108: Display the wireless network quality information on an interface of the terminal.

In this embodiment of the present invention, a terminal may acquire wireless network quality information and display the wireless network quality information to a user, so that user experience in a mobile broadband data service application may be perceived.

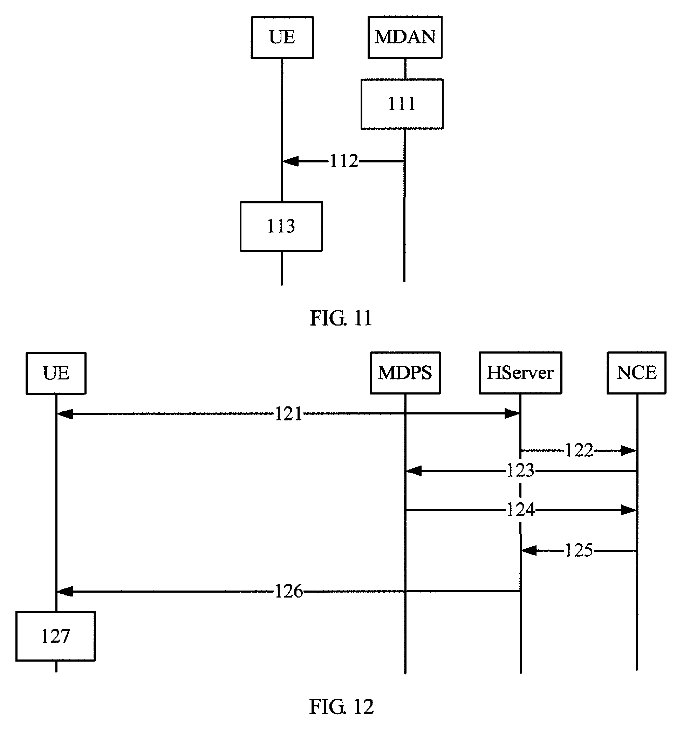

FIG 11 is a schematic interaction diagram of acquiring wireless network quality information according to another embodiment 110 of the present invention.

A wireless network system in the embodiment 110 includes at least a UE and an MDAN. The embodiment 110 includes the following content.

111: An MDAN calculates wireless network quality information at regular time, for example, detecting a cell load status and calculating a current average available rate of a user. For a calculation method, reference is made to step 74 in the embodiment 70.

112: The MDAN directly notifies calculated wireless network quality information to a terminal through an air interface message.

113: After receiving the wireless network quality information pushed by the MDAN, the terminal displays the wireless network quality information on a GUI interface.

In this embodiment of the present invention, a terminal may acquire wireless network quality information and display the wireless network quality information to a user, so that user experience in a mobile broadband data service application may be perceived.

The method for acquiring wireless network quality information is described in the foregoing embodiments, and a method for acquiring user information is described in an embodiment in FIG 12. FIG 12 is a schematic interaction diagram of acquiring user information according to an embodiment 120 of the present invention.

A wireless network system in the embodiment 120 includes at least a UE, an HServer, an NCE, and an MDPS. The embodiment 120 includes the following content.

121: Activate a Networker on a terminal. After the terminal initiates packet data protocol (PDP, Packet Data Protocol) activation or bearing activation, a connection is established between the Networker of the terminal and an HServer, and the Networker maintains in an active status through a message such as a heartbeat.

Then, an information acquiring module in the Networker of the terminal performs wireless network quality information interaction with a specific network element.

122: The HServer requests user information, for example, a user class or remaining package quota, from an NCE at regular time.

123: The NCE forwards a request for the user information (for example, the user class or remaining package quota) to an MDPS. According to actual network deployment of different operators, the user information (for example, the user class or remaining package quota) may also be known from another network element such as an MDCS. In this embodiment, only the MDPS is taken as an example for description.

124: The MDPS queries for the user information (for example, the user class or remaining package quota), and returns the user information to the NCE.

125: The NCE returns the user information (for example, the user class or remaining package quota) to the HServer.

126: The HServer pushes the user information (for example, the user class or remaining package quota) to the Networker of the terminal.

127: Display the user information on an interface of the terminal.

In this embodiment of the present invention, a terminal may acquire user information, and display the user information to a user, so that the user may apply for a service for improving service experience on demand on the premise that the user perceives user experience in advance, thereby improving convenience for the user in a mobile broadband data service application. The terminal may acquire user information separately, and may also acquire wireless network quality information separately. Optionally, the user information and the wireless network quality information may be acquired at the same time through combination of different embodiments, thereby providing sufficient reference information for the user to improve service experience on demand and perceive user experience.

When the user experience cannot be perceived through GUI display of the terminal, a corresponding service and tariff package cannot be subscribed to according to demands of current wireless network quality and service experience either. For example, when the user uses services such as video and large file transmission, when a bandwidth is insufficient, experience cannot be ensured. The prior art cannot support that the user applies for a service, such as network acceleration or package upgrading, for improving the service experience on demand on the premise that the user perceives the user experience in advance. The following solution provided in the present invention solves the foregoing problem.

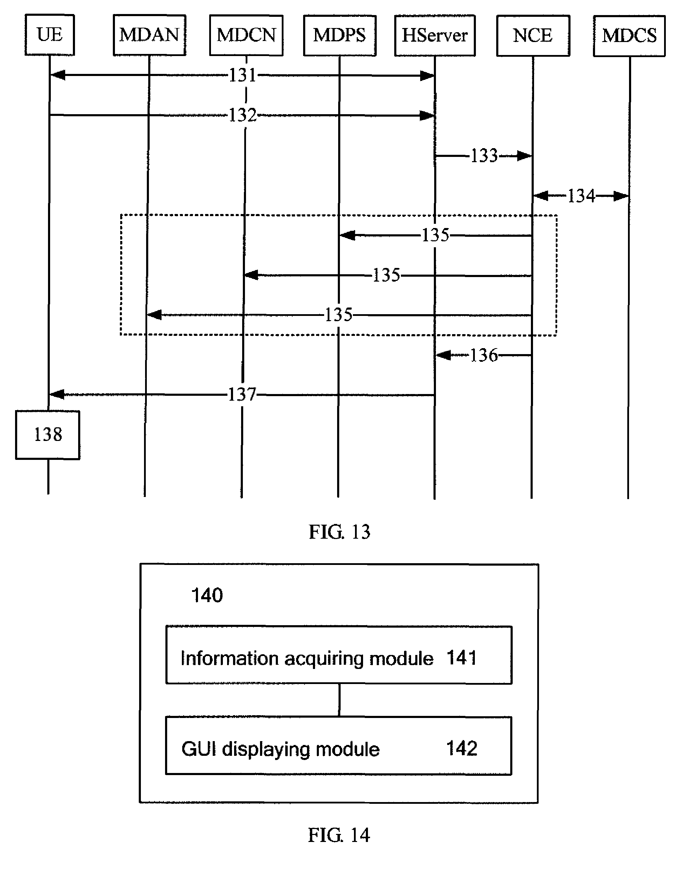

FIG 13 is a schematic interaction diagram of service subscription according to an embodiment 130 of the present invention.

A wireless network system in the embodiment 130 includes at least a UE, an HServer, an NCE, an MDAN, an MDCN, an MDPS, and an MDCS. The embodiment 130 includes the following content.

131: Activate a Networker on a terminal. After the terminal initiates packet data protocol (PDP, Packet Data Protocol) activation or bearing activation, a connection is established between the Networker of the terminal and an HServer, and the Networker maintains in an active status through a message such as a heartbeat. The terminal initiates a data service.

Then, an information acquiring module in the Networker of the terminal performs service subscription information interaction with a specific network element.

132: A user may subscribe to, through the Networker, a corresponding service such as data acceleration or package upgrading according to a service demand on the condition that the user knows current wireless network quality (for example, a cell load or an average available rate) or user information (for example, a user class or remaining package quota). The Networker sends a service subscription request to the HServer.

133: The HServer processes the service subscription request, and forwards the service subscription request to an NCE.

134: The NCE interacts with network elements such as an MDCS and an MDPS to complete service subscription, and first sends a service charging request to the MDCS; and the MDCS charges for a service that is subscribed to.

135: If the charging is successful, the NCE notifies a relevant network element of performing a service policy that is newly subscribed to. The service policy may be performed by the MDPS, and optionally, may also be performed by the MDCN or MDAN. It is recommended that the MDPS perform the service policy. The MDPS performs the service policy, which more complies with a standard network architecture, that is, a policy and charging control (PCC, Policy and Charging Control) architecture.

136: The NCE returns a service subscription processing result to the HServer.

137: The HServer returns the service subscription result to the Networker of the terminal. If the service subscription is successful, a new service takes effect, and the service subscription is completed.

138: Display the service subscription result on an interface of the terminal.

In this embodiment of the present invention, a terminal may acquire user information or wireless network information, and display the foregoing information to a user, so that the user may apply for a service for improving service experience on demand on the premise that the user perceives user experience in advance, thereby improving convenience for the user in a mobile broadband data service application.

FIG 14 is a schematic block diagram of a terminal 140 according to an embodiment of the present invention. As shown in the figure, the terminal 140 includes an information acquiring module 141 and a GUI displaying module 142.

The information acquiring module is configured to acquire wireless network quality information sent by a network element on a network side.

The GUI displaying module is configured to display the wireless network quality information to a user, where the wireless network quality information is acquired from the information acquiring module.

In this embodiment of the present invention, a terminal may acquire wireless network quality information and display the wireless network quality information to a user, so that user experience in a mobile broadband data service application may be improved.

Optionally, the wireless network quality information acquired by the information acquiring module includes at least one of the following: a wireless network load and an expected available network capability.

The wireless network load and the expected available network capability that are acquired by the information acquiring module are a wireless network load and an expected available network capability that are associated with a data service.

The GUI displaying module is specifically configured to add an icon on a system status bar of the terminal, where the icon is used to display the wireless network quality information.

When the network element on the network side includes a mobile data access network element (MDAN), the information acquiring module is specifically configured to acquire the wireless network quality information sent by the MDAN.

When the network element on the network side includes a server logical network element (HServer), the information acquiring module is specifically configured to acquire the wireless network quality information sent by the HServer.

The information acquiring module is specifically configured to: when the network element on the network side further includes an enabling logical network element (NCE) and a mobile data access network element (MDAN), the HServer requests wireless network quality information from the NCE, the NCE acquires the wireless network quality information from the MDAN and sends the wireless network quality information to the HServer, and the HServer sends the wireless network quality information to the terminal, where the wireless network quality information is acquired from the NCE; or the MDAN reports the wireless network quality information to the HServer, and the HServer sends the wireless network quality information to the terminal, where the wireless network quality information is reported by the MDAN.

The information acquiring module is specifically configured to: when the network element on the network side further includes a mobile data core network element (MDCN), the HServer requests the wireless network quality information from the NCE, the MDCN sends detected wireless network quality information to the NCE or the MDCN sends the wireless network quality information to the NCE, where the wireless network quality information is acquired from the MDAN, the NCE sends the wireless network quality information to the HServer, and the HServer sends the wireless network quality information to the terminal, where the wireless network quality information acquired from the NCE.

A process that the information acquiring module acquires the wireless quality information further includes: before the MDCN sends the detected wireless network quality information to the NCE or the MDCN sends the wireless network quality information to the NCE, where the wireless network quality information is acquired from the MDAN, requesting, by the NCE, the wireless network quality information from the MDCN.

Before the information acquiring module acquires the wireless network quality information sent by the server logical network element (HServer), the information acquiring module is further configured to send a request for acquiring the wireless network quality information to the HServer.

The information acquiring module is specifically configured to: by being triggered by an event, send the request for acquiring the wireless network quality information to the HServer.

The event that triggers the information acquiring module includes: timeout of a timer of the information acquiring module or initial running of the terminal.

After the information acquiring module acquires the wireless network quality information, when it is determined that the wireless network quality information is different from wireless network quality information currently displayed by the GUI displaying module, the GUI displaying module is configured to display the wireless network quality information to the user, where the wireless network quality information is acquired from the information acquiring module, which specifically includes: The information acquiring module notifies the GUI displaying module of performing information refreshing; alternatively, after the information acquiring module acquires the wireless network quality information, when it is determined that the wireless network quality information is different from wireless network quality information currently displayed by the GUI displaying module, the information acquiring module directly invokes a function of the GUI displaying module to directly perform information refreshing, or by being triggered by a timer, the GUI displaying module directly acquires the wireless network quality information from the information acquiring module to perform information refreshing.

The information acquiring module is further configured to acquire user information sent by the network element on the network side; and the GUI displaying module displays the user information to the user, where the user information is acquired from the information acquiring module.

The user information acquired by the information acquiring module includes at least one of the following: user subscription information and a package use situation.

The information acquiring module is further configured to acquire operating information of service subscription of the user.

The information acquiring module sends a service subscription request to the network element on the network side according to the operating information.

The information acquiring module receives feedback information of the service subscription request, where the feedback information of the service subscription request is sent by the network element on the network side, and the GUI displaying module displays the feedback information acquired from the information acquiring module.

In the foregoing technical solution, a terminal may further acquire user information, and display the user information to a user, so that the user may apply for a service for improving service experience on demand on the premise that the user perceives user experience in advance, thereby improving convenience for the user in a mobile broadband data service application.

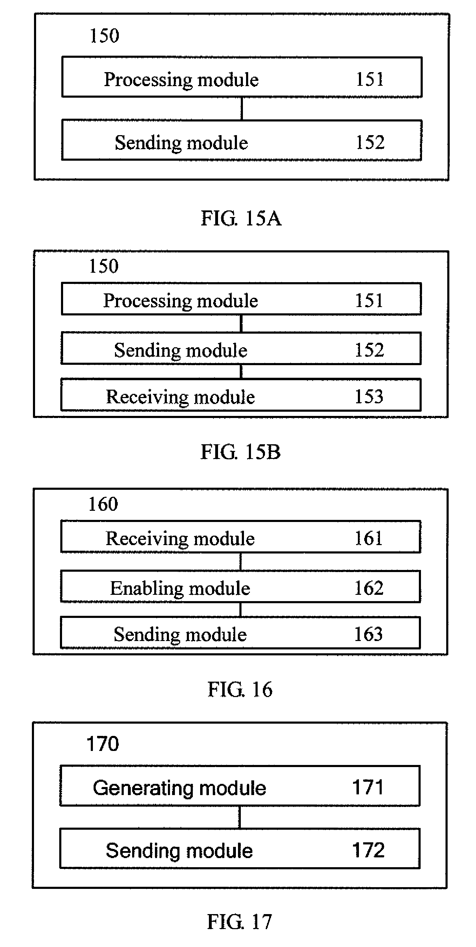

FIG. 15A and FIG. 15B are schematic block diagrams of a device 150 for transmitting wireless network quality information according to an embodiment of the present invention. The device 150 may be the HServer in the foregoing solution. As shown in the figure, the device 150 includes a processing module 151 and a sending module 152.

The processing module is configured to acquire wireless network quality information.

The sending module is configured to send the wireless network quality information to a terminal.

In this embodiment of the present invention, an HServer may acquire wireless network quality information and send the wireless network quality information to a terminal, and the terminal displays the wireless network quality information to a user, so that user experience in a mobile broadband data service application may be perceived.

In addition, optionally, as shown in FIG 15B, the device 150 may further include a receiving module 153.

The wireless network quality information acquired by the processing module includes at least one of the following: a wireless network load and an expected available network capability.

The wireless network load and the expected available network capability that are acquired by the processing module are a wireless network load and an expected available network capability that are associated with a data service.

The processing module is specifically configured to request wireless network quality information form an enabling logical network element (NCE). The NCE acquires the wireless network quality information from a mobile data access network element (MDAN) and sends the wireless network quality information to the processing module. Alternatively, the processing module is specifically configured to receive the wireless network quality information reported by the MDAN.

The processing module is specifically configured to acquire the wireless network quality information that is reported by the MDAN through an HTTP header of an HTTP application data packet, where the HTTP header carries the wireless network quality information.

The processing module is specifically configured to request the wireless network quality information from the NCE. The mobile data core network element (MDCN) sends detected wireless network quality information to the NCE or the MDCN sends the wireless network quality information to the NCE, where the wireless network quality information is acquired from the MDAN. The NCE sends the wireless network quality information to the processing module.

The processing module is specifically configured to acquire the wireless network quality information sent by the NCE. The MDAN transfers the wireless network quality information to the MDCN through a general packet radio service tunneling protocol-user plane GTP-U header, and the MDCN sends the wireless network quality information to the NCE, where the wireless network quality information is acquired from the MDAN, and the GTP-U header carries the wireless network quality information.

A process that the processing module acquires the wireless network quality information further includes: before the MDCN sends the detected wireless network quality information to the NCE or the MDCN sends the wireless network quality information to the NCE, where the wireless network quality information is acquired from the MDAN, requesting, by the NCE, the wireless network quality information from the MDCN.

The processing module is further configured to acquire user information from the NCE. The sending module sends the user information to the terminal, where the user information is acquired from the processing module.

The user information acquired by the processing module includes at least one of the following: user subscription information and a package use situation.

The processing module is specifically configured to acquire the user information that is sent by the NCE and acquired from an MDPS, where the NCE requests the user information from the mobile data policy system (MDPS) according to a request for acquiring the user information, where the request for acquiring the user information is sent by the HServer.

The device further includes a receiving module. The receiving module receives a service subscription request from the terminal. The processing module forwards the service subscription request received by the receiving module to the NCE. The sending module sends feedback information of the service subscription request to the terminal, where the feedback information of the service subscription request is acquired by the processing module from the NCE.

The device further includes a receiving module. Before the device sends the wireless network quality information to the terminal, the receiving module further receives a request for acquiring the wireless network quality information, where the request for acquiring the wireless network quality information is sent by the terminal.

The processing module acquires the wireless network quality information by being triggered by an event.

The event includes timeout of a timer of the device or knowing, by the device, that the terminal runs initially.

In this embodiment of the present invention, an HServer may further acquire user information and send the user information to a terminal, and the terminal displays the user information to a user, thereby improving convenience for the user in a mobile broadband data service application.

FIG 16 is a schematic block diagram of another device 160 for transmitting wireless network quality information according to an embodiment of the present invention. The device 160 may be the NCE in the foregoing solution. As shown in the figure, the device 160 includes a receiving module 161, an enabling module 162, and a sending module 163.

The receiving module receives a wireless network quality information request sent by a server logical network element (HServer).

The enabling module acquires the wireless network quality information according to the request received by the receiving module.

The sending module sends the wireless network quality information to the HServer, where the wireless network quality information is acquired by the enabling module.

In this embodiment of the present invention, an NCE may acquire wireless network quality information and send the wireless network quality information to a terminal, and the terminal displays the wireless network quality information to a user, so that user experience in a mobile broadband data service application may be perceived.

In addition, optionally, the wireless network quality information acquired by the enabling module includes at least one of the following: a wireless network load and an expected available network capability that are associated with a data service.

The wireless network load and the expected available network capability that are acquired by the enabling module are a wireless network load and an expected available network capability that are associated with a data service.

The enabling module is specifically configured to send the wireless network quality information to the HServer after acquiring the wireless network quality information from a mobile data access network element (MDAN).

The enabling module is specifically configured to: a mobile data core network element (MDCN) sends detected wireless network quality information to the enabling module, and the enabling module sends the wireless network quality information acquired by the MDCN to the HServer; or
the enabling module is specifically configured to: a mobile data core network element (MDCN) sends wireless network quality information to the enabling module, where the wireless network quality information is acquired from a mobile data access network element MDAN, and the enabling module sends the wireless network quality information to the HServer, where the wireless network quality information is acquired from the MDCN.

The enabling module is further specifically configured to send a wireless network quality information request to the MDCN.

The receiving module is further configured to receive a request for acquiring user information, where the request for acquiring user information is sent by the HServer. The enabling module sends a user information request to a mobile data policy system (MDPS) according to the request for the user information. The sending module sends the user information to the HServer, where the user information is acquired by the enabling module from the MDPS.

The user information acquired by the enabling module includes at least one of the following: user subscription information and a package use situation.

The receiving module is further configured to receive a service subscription request sent by the HServer. After the enabling module interacts with the mobile data policy system (MDPS) and a mobile data charging system (MDCS) according to the service subscription request, the sending module sends feedback information of the service subscription request to the HServer, where the feedback information of the service subscription request is acquired by the enabling module.

In this embodiment of the present invention, an NCE may further acquire user information and send the user information to a terminal, and the terminal displays the user information to a user, thereby improving convenience for the user in a mobile broadband data service application.

FIG 17 is a schematic block diagram of another device 170 for transmitting wireless network quality information according to an embodiment of the present invention. As shown in the figure, the device 170 includes a generating module 171 and a sending module 172.

The generating module is configured to generate wireless network quality information.

The sending module is configured to send the wireless network quality information to a server logical network element HServer.

In this embodiment of the present invention, a device may generate wireless network quality information and send the wireless network quality information to a terminal, and the terminal displays the wireless network quality information to a user, so that user experience in a mobile broadband data service application may be perceived.

A device for performing the method may be the MDAN in the foregoing solution. In this case, optionally, the wireless network quality information generated by the generating module includes at least one of the following: a wireless network load and an expected available network capability that are associated with a data service.

The wireless network load and the expected available network capability that are generated by the generating module are a wireless network load and an expected available network capability that are associated with a data service.

The generating module generates the wireless network quality information according to an integrated bandwidth allocation weight of a single user, a total integrated bandwidth allocation weight in a system, or a system available bandwidth.

The expected available network capability includes an average available rate of a user. The generating module generates the average available rate of the user through the following formula, which includes:
average available rate of a user = (integrated bandwidth allocation weight of a single user/total integrated bandwidth allocation weight in a system)*system available bandwidth.

The integrated bandwidth allocation weight of a single user, which is used by the generating module, includes:
integrated bandwidth allocation weight of a single user = signal quality weight of the user*bandwidth configuration weight of the user, where the signal quality weight of the user refers to a scheduling weight that is configured according to different signal strength of the terminal in a mobile data access network element (MDAN), and the bandwidth configuration weight of the user refers to a bandwidth weight that is configured according to attributes such as a user class, a service type, and a service class of the user in the MDAN.

The total integrated bandwidth allocation weight in the system, which is used by the generating module, includes: The total integrated bandwidth allocation weight in the system indicates a sum of integrated bandwidth allocation weights of all users that need to send data in the system.

The system available bandwidth used by the generating module includes:
system available bandwidth = total bandwidth that the system can provide - bandwidths of all voice users in the system - minimum assured bandwidths of data services required by all users in the system.

The sending module reports the wireless network quality information to the HServer through an HTTP header of an HTTP application data packet generated by the generating module, where the HTTP header carries the wireless network quality information. Alternatively, the sending module transfers the wireless network quality information to a mobile data core network element MDCN through a general packet radio service tunneling protocol-user plane (GTP-U) header generated by the generating module. The MDCN sends the wireless network quality information to the NCE, where the wireless network quality information is acquired from the device, and the NCE sends the wireless network quality information to the HServer, where the wireless network quality information is acquired from the MDCN, and the GTP-U header carries the wireless network quality information.

Alternatively, a device for performing the method may be the MDCN in the foregoing solution. In this case, the wireless network quality information generated by the generating module includes at least one of the following: a wireless network load and an expected available network capability that are associated with a data service.

The wireless network load and the expected available network capability that are generated by the generating module are a wireless network load and an expected available network capability that are associated with a data service.

The generating module generates wireless network quality information according to a round trip time (RTT) and a packet loss rate.

The sending module sends generated wireless network quality information to an enabling logical network element (NCE), and the NCE sends acquired wireless network quality information to the HServer.

An embodiment of the present invention may further include a system for acquiring wireless network quality information, where the system includes at least one of the foregoing terminal 140, device 150, device 160, and device 170.

In this embodiment of the present invention, a terminal may acquire wireless network quality information and display the wireless network quality information to a user, so that user experience in a mobile broadband data service application may be perceived.

Persons of ordinary skill in the art may be aware that various exemplary units and algorithm steps described with reference to the embodiments disclosed in this specification can be implemented by electronic hardware, or a combination of computer software and electronic hardware. Whether these functions are executed by hardware or software depends on a particular application and a design constraint condition of the technical solution. Persons skilled in the art may use different methods to implement the described functions for every particular application, but it should not be considered that the implementation goes beyond the scope of the present invention.

It may be clearly understood by persons skilled in the art that, for the purpose of convenient and brief description, for a specific working process of the foregoing system, device and unit, reference may be made to a corresponding process in the foregoing method embodiments, and the details are not described herein again.

In the embodiments provided in this application, it should be understood that the disclosed system, device, and method may be implemented in other manners. For example, the device embodiment described in the foregoing is merely exemplary. For example, the division of modules is merely a division of logical functions and there may be other division manners in actual applications. For example, multiple modules or components may be combined or may be integrated into another system, or some characteristics may be ignored or not executed. In addition, the shown or discussed mutual couplings or direct couplings or communication connections may be implemented through some interfaces. The indirect couplings or communication connections between apparatuses or units may be implemented in electrical, mechanical, or other forms.

Modules described as separate components may be or may not be physically separated. Components shown as modules may be or may not be physical modules, that is, may be located at one place, or may also be distributed to a plurality of network modules. Part or all of the modules may be selected according to an actual requirement to implement the objective of the solutions of the embodiments.

In addition, function modules in the embodiments of the present invention may be integrated into a processing unit, or each unit may exist alone physically, or two or more units are integrated into one unit.

When the functions are implemented in the form of a software function unit and sold or used as a stand-alone product, the functions may be stored in a computer-readable storage medium. Based on such understanding, the essence of the technical solutions of the present invention, or part that makes contributions to the prior art, or part of the technical solution may be embodied in the form of a software product. The computer software product may be stored in a storage medium, and includes several instructions for instructing a computer device (for example, may be a personal computer, a server, or a network device) to execute all or part of the steps of the method in each embodiment of the present invention. The foregoing storage medium includes any medium capable of storing program codes, such as a USB flash disk, a mobile hard disk, a read-only memory (ROM, Read-Only Memory), a random access memory (RAM, Random Access Memory), a magnetic disk, or an optical disk.

The foregoing descriptions are merely exemplary embodiments of the present invention, but are not intended to limit the protection scope of the present invention. Any variation or replacement made by persons skilled in the art within the technical scope disclosed in the present invention shall all fall within the protection scope of the present invention. Therefore, the protection scope of the present invention shall be subject to that of the appended claims.

## Claims

1. A method for a terminal to acquire wireless network quality information, comprising:
acquiring, by a terminal, wireless network quality information sent by a network element on a network side; and
displaying, by the terminal, the wireless network quality information to a user.

2. The method according to claim 1, wherein the wireless network quality information comprises at least one of the following:
a wireless network load and an expected available network capability.

3. The method according to claim 2, wherein the wireless network load and the expected available network capability are a wireless network load and an expected available network capability that are associated with a data service.

4. The method according to any one of claims 1 to 3, wherein the displaying, by the terminal, the wireless network quality information to the user comprises:
adding an icon on a system status bar of the terminal, wherein the icon is used to display the wireless network quality information.

5. The method according to any one of claims 1 to 4, wherein when the network element on the network side comprises a mobile data access network element MDAN, the acquiring, by the terminal, the wireless network quality information sent by the network element on the network side specifically comprises:
acquiring, by the terminal, the wireless network quality information sent by the MDAN.

6. The method according to any one of claims 1 to 4, wherein when the network element on the network side comprises a server logical network element HServer, the acquiring, by the terminal, the wireless network quality information sent by the network element on the network side specifically comprises:
acquiring, by the terminal, the wireless network quality information sent by the HServer.

7. The method according to claim 6, wherein the acquiring, by the terminal, the wireless network quality information sent by the server logical network element HServer specifically comprises:
when the network element on the network side further comprises an enabling logical network element NCE and an MDAN, requesting, by the HServer, the wireless network quality information from the NCE; sending, by the NCE, the wireless network quality information to the HServer after acquiring the wireless network quality information from the MDAN; and sending, by the HServer, the wireless network quality information to the terminal, where the wireless network quality information is acquired from the NCE, or
reporting, by the MDAN, the wireless network quality information to the HServer, and sending, by the HServer, the wireless network quality information to the terminal, where the wireless network quality information is reported by the MDAN.

8. The method according to claim 6, wherein the acquiring, by the terminal, the wireless network quality information sent by the server logical network element HServer specifically comprises:
when the network element on the network side further comprises a mobile data core network element MDCN, requesting, by the HServer, the wireless network quality information from the NCE; sending, by the MDCN, detected wireless network quality information to the NCE, or sending, by the MDCN, the wireless network quality information to the NCE, where the wireless network quality information is acquired from the MDAN; sending, by the NCE, the wireless network quality information to the HServer; and sending, by the HServer, the wireless network quality information to the terminal, where the wireless network quality information is acquired from the NCE.

9. The method according to claim 8, wherein before the sending, by the MDCN, the detected wireless network quality information to the NCE or the sending, by the MDCN, the wireless network quality information to the NCE, where the wireless network quality information is acquired from the MDAN, further comprising:
requesting, by the NCE, the wireless network quality information from the MDCN.

10. The method according to any one of claims 6 to 9, wherein before the acquiring, by the terminal, the wireless network quality information sent by the server logical network element HServer, further comprising:
sending, by the terminal, a request for acquiring the wireless network quality information to the HServer.

11. The method according to claim 10, wherein the sending, by the terminal, the request for acquiring the wireless network quality information to the HServer specifically comprises:
by being triggered by an event, sending, by the terminal, the request for acquiring the wireless network quality information to the HServer.

12. The method according to claim 11, wherein the event comprises:
timeout of a timer of the terminal or initial running of the terminal.

13. The method according to any one of claims 1 to 12, further comprising:
after the acquiring, by the terminal, the wireless network quality information, if it is determined that the wireless network quality information is different from currently displayed wireless network quality information, the displaying, by the terminal, the wireless network quality information to the user specifically comprises: performing, by the terminal, information refreshing on the wireless network quality information that is displayed to the user.

14. The method according to any one of claims 1 to 13, further comprising:
further acquiring, by the terminal, user information sent by the network element on the network side; and
displaying, by the terminal, the user information to the user.

15. The method according to claim 14, wherein the user information comprises at least one of the following: user subscription information and a package use situation.

16. The method according to any one of claims 1 to 15, further comprising:
acquiring, by the terminal, operating information of service subscription of the user;
sending a service subscription request to the network element on the network side according to the operating information; and
receiving and displaying feedback information of the service subscription request, where the feedback information of the service subscription request is sent by the network element on the network side.

17. A terminal, comprising an information acquiring module and a graphic user interface GUI displaying module, wherein
the information acquiring module is configured to acquire wireless network quality information sent by a network element on a network side; and
the GUI displaying module is configured to display the wireless network quality information to a user, wherein the wireless network quality information is acquired from the information acquiring module.

18. The terminal according to claim 17, wherein the wireless network quality information acquired by the information acquiring module comprises at least one of the following:
a wireless network load and an expected available network capability.

19. The terminal according to claim 2, wherein the wireless network load and the expected available network capability that are acquired by the information acquiring module are a wireless network load and an expected available network capability that are associated with a data service.

20. The terminal according to any one of claims 17 to 19, wherein
the GUI displaying module is specifically configured to add an icon on a system status bar of the terminal, wherein the icon is used to display the wireless network quality information.

21. The terminal according to any one of claims 17 to 20, wherein
when the network element on the network side comprises a mobile data access network element MDAN, the information acquiring module is specifically configured to acquire the wireless network quality information sent by the MDAN.

22. The terminal according to any one of claims 17 to 20, wherein
when the network element on the network side comprises a server logical network element HServer, the information acquiring module is specifically configured to acquire the wireless network quality information sent by the HServer.

23. The terminal according to claim 22, wherein
the information acquiring module is specifically configured to: when the network element on the network side further comprises an enabling logical network element NCE and a mobile data access network element MDAN, the HServer requests wireless network quality information from the NCE, the NCE sends the wireless network quality information to the HServer after acquiring the wireless network quality information from the MDAN, and the HServer sends the wireless network quality information to the terminal, wherein the wireless network quality information is acquired from the NCE; or
the MDAN reports the wireless network quality information to the HServer, and the HServer sends the wireless network quality information to the terminal, wherein the wireless network quality information is reported by the MDAN.

24. The terminal according to claim 22, wherein
the information acquiring module is specifically configured to: when the network element on the network side further comprises a mobile data core network element MDCN, the HServer requests the wireless network quality information from the NCE, the MDCN sends detected wireless network quality information to the NCE or the MDCN sends the wireless network quality information to the NCE, wherein the wireless network quality information is acquired from the MDAN, the NCE sends the wireless network quality information to the HServer, and the HServer sends the wireless network quality information to the terminal, wherein the wireless network quality information is acquired from the NCE.

25. The terminal according to claim 24, wherein a process that the information acquiring module acquires the wireless quality information further comprises:
before the MDCN sends the detected wireless network quality information to the NCE or the MDCN sends the wireless network quality information to the NCE, wherein the wireless network quality information is acquired from the MDAN, requesting, by the NCE, the wireless network quality information from the MDCN.

26. The terminal according to any one of claims 22 to 25, wherein
before the information acquiring module acquires the wireless network quality information sent by the server logical network element HServer, the information acquiring module is further configured to send a request for acquiring the wireless network quality information to the HServer.

27. The terminal according to claim 26, wherein
the information acquiring module is specifically configured to: by being triggered by an event, send the request for acquiring the wireless network quality information to the HServer.

28. The terminal according to claim 27, wherein the event that triggers the information acquiring module comprises:
timeout of a timer of the information acquiring module or initial running of the terminal.

29. The terminal according to any one of claims 17 to 28, wherein
after the information acquiring module acquires the wireless network quality information, if it is determined that the wireless network quality information is different from wireless network quality information currently displayed by the GUI displaying module, the GUI displaying module is configured to display the wireless network quality information to the user, wherein the wireless network quality information is acquired from the information acquiring module, which specifically comprises: notifying, by the information acquiring module, the GUI displaying module of performing information refreshing; or
after the information acquiring module acquires the wireless network quality information, if it is determined the wireless network quality information is different from wireless network quality information currently displayed by the GUI displaying module, the information acquiring module directly invokes a function of the GUI displaying module to perform information refreshing; or
by being triggered by a timer, the GUI displaying module directly acquires the wireless network quality information from the information acquiring module to perform information refreshing.

30. The terminal according to any one of claims 17 to 29, wherein
the information acquiring module is further configured to acquire user information sent by the network element on the network side; and
the GUI displaying module displays the user information to the user, wherein the user information is acquired from the information acquiring module.

31. The terminal according to claim 30, wherein the user information acquired by the information acquiring module comprises at least one of the following: user subscription information and a package use situation.

32. The terminal according to any one of claims 17 to 31, wherein
the information acquiring module is further configured to acquire operating information of service subscription of the user;
the information acquiring module sends a service subscription request to the network element on the network side according to the operating information; and
the information acquiring module receives feedback information of the service subscription request, wherein the feedback information of the service subscription request is sent by the network element on the network side, and the GUI displaying module displays the feedback information acquired from the information acquiring module.

33. A method for transmitting wireless network quality information, comprising:
acquiring, by a server logical network element HServer, wireless network quality information; and
sending, by the HServer, the wireless network quality information to a terminal.

34. The method according to claim 33, wherein the wireless network quality information comprises at least one of the following:
a wireless network load and an expected available network capability.

35. The method according to claim 34, wherein the wireless network load and the expected available network capability are a wireless network load and an expected available network capability that are associated with a data service.

36. The method according to any one of claims 33 to 35, wherein a specific process that the HServer acquires the wireless network quality information comprises:
requesting, by the HServer, the wireless network quality information from an enabling logical network element NCE; and acquiring, by the NCE, the wireless network quality information from a mobile data access network element MDAN, and sending the wireless network quality information to the HServer; or
reporting, by the MDAN, the wireless network quality information to the HServer.

37. The method according to claim 36, wherein the reporting, by the MDAN, the wireless network quality information to the HServer comprises:
reporting, by the MDAN, the wireless network quality information to the HServer through an HTTP header of an HTTP application data packet, wherein the HTTP header carries the wireless network quality information.

38. The method according to any one of claims 33 to 35, wherein a specific process that the HServer acquires the wireless network quality information comprises:
requesting, by the HServer, the wireless network quality information from the NCE; sending, by a mobile data core network element MDCN, detected wireless network quality information to the NCE or sending, by the MDCN, the wireless network quality information to the NCE, wherein the wireless network quality information is acquired from an MDAN; and sending, by the NCE, the wireless network quality information to the HServer.

39. The method according to claim 37, wherein the sending, by the MDCN, the wireless network quality information to the NCE, wherein the wireless network quality information is acquired from the MDAN, comprises:
transferring, by the MDAN, the wireless network quality information to the MDCN through a general packet radio service tunneling protocol-user plane GTP-U header; and sending, by the MDCN, the wireless network quality information to the NCE, wherein the wireless network quality information is acquired from the MDAN, and the GTP-U header carries the wireless network quality information.

40. The method according to claim 38 or 39, wherein before the sending, by the MDCN, the detected wireless network quality information to the NCE or the sending, by the MDCN, the wireless network quality information to the NCE, wherein the wireless network quality information is acquired from the MDAN, further comprising:
requesting, by the NCE, the wireless network quality information from the MDCN.

41. The method according to any one of claims 33 to 40, further comprising:
acquiring, by the HServer, user information from the NCE, and sending the user information to the terminal.

42. The method according to claim 9, wherein the user information comprises at least one of the following:
user subscription information and a package use situation.

43. The method according to claim 42, wherein a method for acquiring, by the HServer, the user information from the NCE specifically comprises:
requesting, by the NCE, the user information from a mobile data policy system MDPS according to a request for acquiring the user information, wherein the request for acquiring the user information is sent by the HServer, and sending the user information to the HServer, wherein the user information is acquired from the MDPS.

44. The method according to any one of claims 33 to 43, further comprising:
receiving, by the HServer, a service subscription request from the terminal, forwarding the service subscription request to the NCE, and sending feedback information of the service subscription request to the terminal, wherein the feedback information of the service subscription request is from the NCE.

45. The method according to any one of claims 33 to 44, wherein before the sending, by the HServer, the wireless network quality information to the terminal, further comprising:
receiving a request for acquiring the wireless network quality information, wherein the request for acquiring the wireless network quality information is sent by the terminal.

46. The method according to any one of claims 33 to 44, wherein the acquiring, by the HServer, the wireless network quality information specifically comprises:
acquiring, by the HServer, the wireless network quality information by being triggered by an event.

47. The method according to claim 46, wherein the event comprises:
timeout of a timer of the HServer or knowing, by the HServer, that the terminal runs initially.

48. A device for transmitting wireless network quality information, comprising a processing module and a sending module, wherein
the processing module is configured to acquire wireless network quality information; and
the sending module is configured to send the wireless network quality information to a terminal.

49. The device according to claim 48, wherein the wireless network quality information acquired by the processing module comprises at least one of the following:
a wireless network load and an expected available network capability.

50. The device according to claim 49, wherein the wireless network load and the expected available network capability that are acquired by the processing module are a wireless network load and an expected available network capability that are associated with a data service.

51. The device according to any one of claims 48 to 50, wherein
the processing module is specifically configured to request the wireless network quality information from an enabling logical network element NCE, wherein the NCE sends the wireless network quality information to the processing module after acquiring the wireless network quality information from a mobile data access network element MDAN; or
the processing module is specifically configured to receive the wireless network quality information reported by the MDAN.

52. The device according to claim 51, wherein:
the processing module is specifically configured to acquire the wireless network quality information that is reported by the MDAN through an HTTP header of an HTTP application data packet, wherein the HTTP header carries the wireless network quality information.

53. The device according to any one of claims 48 to 50, wherein
the processing module is specifically configured to request the wireless network quality information from an NCE, wherein a mobile data core network element MDCN sends detected wireless network quality information to the NCE or the MDCN sends the wireless network quality information to the NCE, wherein the wireless network quality information is acquired from an MDAN, and the NCE sends the wireless network quality information to the processing module.

54. The device according to claim 53, wherein:
the processing module is specifically configured to acquire the wireless network quality information sent by the NCE, wherein the MDAN transfers the wireless network quality information to the MDCN through a general packet radio service tunneling protocol-user plane GTP-U header, and the MDCN sends the wireless network quality information to the NCE, wherein the wireless network quality information is acquired from the MDAN, and the GTP-U header carries the wireless network quality information.

55. The device according to claim 52 or 53, wherein a process that the processing module acquires the wireless network quality information further comprises:
before the MDCN sends the detected wireless network quality information to the NCE or the MDCN sends the wireless network quality information to the NCE, where the wireless network quality information is acquired from the MDAN, requesting, by the NCE, the wireless network quality information from the MDCN.

56. The device according to any one of claims 48 to 55, wherein
the processing module is further configured to acquire user information from the NCE; and
the sending module sends the user information to the terminal, wherein the user information is acquired from the processing module.

57. The device according to claim 56, wherein the user information acquired by the processing module comprises at least one of the following:
user subscription information and a package use situation.

58. The device according to claim 57, wherein:
the processing module is specifically configured to acquire the user information that is sent by the NCE and acquired from an MDPS, wherein the NCE requests the user information from the mobile data policy system MDPS according to a request for acquiring the user information, wherein the request for acquiring the user information is sent by the HServer.

59. The device according to any one of claims 48 to 58, further comprising a receiving module, wherein
the receiving module receives a service subscription request from the terminal, the processing module forwards the service subscription request received by the receiving module to the NCE, and the sending module sends feedback information of the service subscription request to the terminal, wherein the feedback information of the service subscription request is acquired by the processing module from the NCE.

60. The device according to any one of claims 48 to 59, further comprising a receiving module, wherein
before the device sends the wireless network quality information to the terminal, the receiving module further receives a request for acquiring the wireless network quality information, wherein the request for acquiring the wireless network quality information is sent by the terminal.

61. The device according to any one of claims 48 to 59, wherein:
the processing module acquires the wireless network quality information by being triggered by an event.

62. The device according to claim 61, wherein the event comprises:
timeout of a timer of the device or knowing, by the device, that the terminal runs initially.

63. A method for transmitting wireless network quality information, comprising:
receiving, by an enabling logical network element, a wireless network quality information request sent by a server logical network element HServer; and
acquiring, by the NCE, the wireless network quality information according to the request, and sending the wireless network quality information to the HServer.

64. The method according to claim 63, wherein the wireless network quality information comprises at least one of the following:
a wireless network load and an expected available network capability that are associated with a data service.

65. The method according to claim 64, wherein the wireless network load and the expected available network capability are a wireless network load and an expected available network capability that are associated with a data service.

66. The method according to any one of claims 63 to 65, wherein the acquiring, by the NCE, the wireless network quality information, and sending the wireless network quality information to the HServer specifically comprise:
acquiring, by the NCE, the wireless network quality information from a mobile data access network element MDAN, and sending the wireless network quality information to the HServer.

67. The method according to any one of claim 63 or 65, wherein the acquiring, by the NCE, the wireless network quality information, and sending the wireless network quality information to the HServer specifically comprise:
sending, by a mobile data core network element MDCN, detected wireless network quality information to the NCE, and sending, by the NCE, the wireless network quality information to the HServer, wherein the wireless network quality information is acquired by the MDCN; or
sending, by a mobile data core network element MDCN, wireless network quality information to the NCE, wherein the wireless network quality information is acquired from a mobile data access network MDAN element, and sending, by the NCE, the wireless network quality information to the HServer, wherein the wireless network quality information is acquired from the MDCN.

68. The method according to claim 5, wherein before the acquiring, by the NCE, the wireless network quality information, further comprising:
sending, by the NCE, a wireless network quality information request to the MDCN.

69. The method according to any one of claims 63 to 67, further comprising:
receiving a request for acquiring user information, wherein the request for acquiring user information is sent by the HServer, sending a user information request to a mobile data policy system MDPS according to the request for the user information, and sending the user information to the HServer, wherein the user information is acquired from the MDPS.

70. The method according to claim 69, wherein the user information comprises at least one of the following:
user subscription information and a package use situation.

71. The method according to any one of claims 63 to 70, further comprising:
receiving a service subscription request sent by the HServer, and after interacting with the mobile data policy system MDPS and a mobile data charging system MDCS, sending acquired feedback information of the service subscription request to the HServer.

72. A device for transmitting wireless network quality information, comprising a receiving module, an enabling module, and a sending module, wherein:
the receiving module receives a wireless network quality information request sent by a server logical network element HServer;
the enabling module acquires the wireless network quality information according to the request received by the receiving module; and
the sending module sends the wireless network quality information to the HServer, wherein the wireless network quality information is acquired by the enabling module.

73. The device according to claim 72, wherein the wireless network quality information acquired by the enabling module comprises at least one of the following:
a wireless network load and an expected available network capability that are associated with a data service.

74. The device according to claim 73, wherein the wireless network load and the expected available network capability that are acquired by the enabling module are a wireless network load and an expected available network capability that are associated with a data service.

75. The device according to any one of claims 72 to 74, wherein
the enabling module is specifically configured to send the wireless network quality information to the HServer after acquiring the wireless network quality information from a mobile data access network element MDAN.

76. The device according to any one of claims 72 to 74, wherein
the enabling module is specifically configured to: a mobile data core network element MDCN sends detected wireless network quality information to the enabling module, and the enabling module sends the wireless network quality information to the HServer, wherein the wireless network quality information is acquired by the MDCN; or
the enabling module is specifically configured to: a mobile data core network element MDCN sends wireless network quality information to the enabling module, wherein the wireless network quality information is acquired from a mobile data access network element MDAN, and the enabling module sends the wireless network quality information to the HServer, wherein the wireless network quality information is acquired from the MDCN.

77. The device according to claim 76, wherein:
the enabling module is further specifically configured to send a wireless network quality information request to the MDCN.

78. The device according to any one of claims 72 to 76, wherein
the receiving module is further configured to receive a request for acquiring user information, wherein the request for acquiring user information is sent by the HServer, the enabling module sends a user information request to a mobile data policy system MDPS according to the request for the user information, and the sending module sends the user information to the HServer, wherein the user information is acquired by the enabling module from the MDPS.

79. The device according to claim 78, wherein the user information acquired by the enabling module comprises at least one of the following:
user subscription information and a package use situation.

80. The device according to any one of claims 72 to 79, wherein
the receiving module is further configured to receive a service subscription request sent by the HServer; and after the enabling module interacts with the mobile data policy system MDPS and a mobile data charging system MDCS according to the service subscription request, the sending module sends feedback information of the service subscription request to the HServer, wherein the feedback information of the service subscription request is acquired by the enabling module.

81. A method for transmitting wireless network quality information, comprising:
generating wireless network quality information; and
sending the wireless network quality information to a server logical network element HServer.

82. The method according to claim 81, wherein the wireless network quality information comprises at least one of the following:
a wireless network load and an expected available network capability that are associated with a data service.

83. The method according to claim 82, wherein the wireless network load and the expected available network capability are a wireless network load and an expected available network capability that are associated with a data service.

84. The method according to any one of claims 81 to 83, wherein the generating the wireless network quality information specifically comprises:
generating the wireless network quality information according to an integrated bandwidth allocation weight of a single user, a total integrated bandwidth allocation weight in a system, or a system available bandwidth.

85. The method according to claim 84, wherein when the expected available network capability comprises an average available rate of a user, the generating the wireless network quality information specifically comprises:
generating an average available rate of a user through the following formula, wherein
average available rate of a user = (integrated bandwidth allocation weight of a single user/total integrated bandwidth allocation weight in a system)*system available bandwidth.

86. The method according to claim 85, wherein the integrated bandwidth allocation weight of a single user comprises:
integrated bandwidth allocation weight of a single user = signal quality weight of the user*bandwidth configuration weight of the user, wherein
the signal quality weight of the user refers to a scheduling weight that is configured according to different signal strength of a terminal in a mobile data access network element MDAN, and the bandwidth configuration weight of the user refers to a bandwidth weight that is configured according to attributes such as a user class, a service type, and a service class of the user in the MDAN.

87. The method according to claim 85, wherein
the total integrated bandwidth allocation weight in the system indicates a sum of integrated bandwidth allocation weights of all users that need to send data in the system.

88. The method according to claim 85, wherein the system available bandwidth comprises:
system available bandwidth = total bandwidth that the system can provide - bandwidths of all voice users in the system - minimum assured bandwidths of data services required by all users in the system.

89. The method according to any one of claims 81 to 88, wherein the sending the wireless network quality information to the HServer specifically comprises:
reporting, by the mobile data access network element MDAN, the wireless network quality information to the HServer through an HTTP header of a generated HTTP application data packet, wherein the HTTP header carries the wireless network quality information; or
transferring, by the mobile data access network MDAN element, the wireless network quality information to a mobile data core network element MDCN through a generated general packet radio service tunneling protocol-user plane GTP-U header; sending, by the MDCN, the wireless network quality information to an enabling logical network element NCE, wherein the wireless network quality information is acquired from the MDAN, and sending, by the NCE, the wireless network quality information to the HServer, wherein the wireless network quality information is acquired from the MDCN, and the GTP-U header carries the wireless network quality information.

90. A device for transmitting wireless network quality information, comprising a generating module and a sending module, wherein
the generating module is configured to generate wireless network quality information; and
the sending module is configured to send the wireless network quality information to a server logical network element HServer.

91. The device according to claim 90, wherein the wireless network quality information generated by the generating module comprises at least one of the following:
a wireless network load and an expected available network capability that are associated with a data service.

92. The device according to claim 91, wherein the wireless network load and the expected available network capability that are generated by the generating module are a wireless network load and an expected available network capability that are associated with a data service.

93. The device according to any one of claims 90 to 92, wherein the generating module generates the wireless network quality information according to an integrated bandwidth allocation weight of a single user, a total integrated bandwidth allocation weight in a system, or a system available bandwidth.

94. The device according to claim 93, wherein:
the expected available network capability comprises an average available rate of a user, and the generating module generates an average available rate of a user through the following formula, comprising:
average available speed of a user = (integrated bandwidth allocation weight of a single user/total integrated bandwidth allocation weight in a system)*system available bandwidth.

95. The device according to claim 94, wherein the integrated bandwidth allocation weight of a single user, which is used by the generating module, comprises:
integrated bandwidth allocation weight of a single user = signal quality weight of the user*bandwidth configuration weight of the user, wherein the signal quality weight of the user refers to a scheduling weight that is configured according to different signal strength of a terminal in a mobile data access network element MDAN, and the bandwidth configuration weight of the user refers to a bandwidth weight that is configured according to attributes such as a user class, a service type, and a service class of the user in the MDAN.

96. The device according to claim 94, wherein the total integrated bandwidth allocation weight in the system, which is used by the generating module, comprises:
the total integrated bandwidth allocation weight in the system indicates a sum of integrated bandwidth allocation weights of all users that need to send data in the system.

97. The device according to claim 94, wherein the system available bandwidth used by the generating module comprises:
system available bandwidth = total bandwidth that the system can provide - bandwidths of all voice users in the system - minimum assured bandwidths of data services required by all users in the system.

98. The device according to any one of claims 90 to 97, wherein
the sending module reports the wireless network quality information to the HServer through an HTTP header of an HTTP application data packet generated by the generating module, wherein the HTTP header carries the wireless network quality information; or
the sending module transfers the wireless network quality information to a mobile data core network element MDCN through a general packet radio service tunneling protocol-user plane GTP-U header generated by the generating module; and the MDCN sends the wireless network quality information to the NCE, wherein the wireless network quality information is acquired from the device, and the NCE sends the wireless network quality information to the HServer, wherein the wireless network quality information is acquired from the MDCN, and the GTP-U header carries the wireless network quality information.

99. A method for transmitting wireless network quality information, comprising:
generating wireless network quality information; and
sending the wireless network quality information to a server logical network element HServer.

100. The method according to claim 99, wherein the wireless network quality information comprises at least one of the following:
a wireless network load and an expected available network capability that are associated with a data service.

101. The method according to claim 100, wherein the wireless network load and the expected available network capability are a wireless network load and an expected available network capability that are associated with a data service.

102. The method according to any one of claims 99 to 101, wherein the generating the wireless network quality information comprises:
generating the wireless network quality information according to a round trip time RTT and a packet loss rate.

103. The method according to any one of claims 99 to 102, wherein the sending the wireless network quality information to the HServer specifically comprises:
sending generated wireless network quality information to an enabling logical network element NCE, and sending, by the NCE, acquired wireless network quality information to the HServer.

104. A device for transmitting wireless network quality information, comprising a generating module and a sending module, wherein
the generating module is configured to generate wireless network quality information; and
the sending module is configured to send the wireless network quality information to a server logical network element HServer.

105. The device according to claim 104, wherein the wireless network quality information generated by the generating module comprises at least one of the following:
a wireless network load and an expected available network capability that are associated with a data service.

106. The device according to claim 105, wherein the wireless network load and the expected available network capability that are generated by the generating module are a wireless network load and an expected available network capability that are associated with a data service.

107. The device according to any one of claims 104 to 106, wherein
the generating module generates the wireless network quality information according to a round trip time RTT and a packet loss rate.

108. The device according to any one of claims 104 to 107, wherein
the sending module sends generated wireless network quality information to an enabling logical network element NCE, and the NCE sends acquired wireless network quality information to the HServer.
